# EUROPÄISCHE PATENTSCHRIFT

(11) **EP 3 320 303 B1**
(45) Veröffentlichungstag und Bekanntmachung des Hinweises auf die Patenterteilung: **21.02.2024**
(21) Anmeldenummer: 16742189.0
(22) Anmeldetag: 05.07.2016
(51) Int. Cl.: G03B 15/05, G01B 11/25, G03B 21/00, G01B 11/30

(54) **VORRICHTUNG ZUR BELEUCHTUNG VON GEGENSTÄNDEN**
DEVICE FOR ILLUMINATING OBJECTS
DISPOSITIF POUR ÉCLAIRER DES OBJETS

(30) Priorität: 09.07.2015 DE 102015212910
(43) Veröffentlichungstag der Anmeldung: 16.05.2018
(73) Patentinhaber: SAC Sirius Advanced Cybernetics GmbH, 76227 Karlsruhe (DE)
(72) Erfinder: WAGNER, Christoph, 75203 Königsbach-Stein (DE)
(74) Vertreter: Kordel, Mattias
(86) Internationale Anmeldenummer: PCT/EP2016/065789
(87) Internationale Veröffentlichungsnummer: WO 2017/005726

(56) Entgegenhaltungen:
- EP-A1- 1 030 173
- EP-A2- 2 355 483
- WO-A1-2015/080941
- DE-A1- 10 063 293
- DE-A1-102013 212 827
- DE-A1-102015 210 440
- DE-U1- 29 819 954
- DE-U1-202013 104 938
- US-A1- 2007 031 029
- HIJAZI A ET AL: "A novel ultra-high speed camera for digital image processing applications", MEASUREMENT SCIENCE AND TECHNOLOGY, IOP, BRISTOL, GB, vol. 19, no. 8, 1 August 2008 (2008-08-01) , page 85503, XP020144358, ISSN: 0957-0233, DOI: 10.1088/0957-0233/19/8/085503

## Beschreibung

Die Erfindung betrifft eine Vorrichtung zur Beleuchtung von Gegenständen. Insbesondere sollen damit industriell gefertigte Bauteile schritthaltend zum Produktionstakt optisch geprüft werden. Oberflächen dieser Bauteile weisen dabei häufig optische Eigenschaften auf, die durch glänzende Reflexion gekennzeichnet sind, andere wiederum weisen diffuse Reflexionseigenschaften auf. Beispiele hierfür sind Bauteile aus Metall, Kunststoff oder Keramik sowie viele weitere mehr. Dokument EP2355483A2 offenbart eine Vorrichtung zur Beleuchtung von Gegenständen mit einer Kamera und einer Steuereinrichtung.

Bestehende Vorrichtungen und Verfahren sind zwar in der Lage, die Oberfläche vieler solcher Bauteile zu prüfen. Der technische und finanzielle Aufwand hierfür variiert jedoch in Abhängigkeit von der verwendeter Vorrichtung bzw. dem verwendeten Verfahren und abhängig davon, wie hoch die Anforderungen der Prüfung gestellt sind.

Der Erfindung liegt daher die Aufgabe zugrunde, eine Vorrichtung zu schaffen, welche die genannten Nachteile nicht aufweist. Insbesondere soll die Vorrichtung es ermöglichen, selbst feinste Fehler auf Bauteilen mit anspruchsvollen optischen Eigenschaften kostengünstig zu erfassen.

Die besondere Herausforderung der Aufgabe liegt darin, die Bestandteile der Vorrichtung so zu integrieren, dass für den Anwender eine möglichst einfache Installation im Prüfprozess ermöglicht wird. Gleichzeitig ist für eine kostengünstige Serienfertigung der Vorrichtung zu sorgen.

Die Aufgabe wird gelöst, indem eine Vorrichtung mit den Merkmalen des Anspruch 1 geschaffen wird. Vorteilhafte Ausgestaltungen ergeben sich aus den Unteransprüchen 2 bis 14.

Die Aufgabe wird gelöst, indem eine Vorrichtung zur insbesondere flächigen Beleuchtung von Gegenständen geschaffen wird, welche eine Abstrahlfläche und wenigstens zwei - vorzugsweise unabhängig voneinander ansteuerbare - Beleuchtungseinrichtungen aufweist. Die wenigstens zwei Beleuchtungseinrichtungen sind angeordnet und ausgebildet, um auf der wenigstens einen Abstrahlfläche wenigstens zwei verschiedene Beleuchtungsverteilungen zu erzeugen. Insbesondere ist es mittels der Vorrichtung möglich, wenigstens zwei strukturierte Beleuchtungsverteilungen oder Beleuchtungsmuster auf der Abstrahlfläche zu erzeugen. Mittels der derart erzeugten, vorzugsweise flächig strukturierten Beleuchtung ist es möglich, ein zu prüfendes Bauteil aus mehreren Raumrichtungen zu beleuchten und mit einer hierfür geeigneten Erfassungseinrichtung und/oder einer mit dieser verbundenen Kamera zu erfassen. Die dabei entstehenden Helligkeitsschattierungen in aufgenommenen Bildern enthalten Informationen über die topographische Beschaffenheit der Bauteiloberfläche. Die Vorrichtung zur bevorzugt flächigen Beleuchtung schafft eine Möglichkeit, in hochintegrierter, kostengünstiger und bauraumsparender Bauweise eine Beleuchtung von Gegenständen aus mehreren Raumrichtungen darzustellen, sodass es letztlich möglich wird, selbst feinste Fehler auf Bauteilen mit anspruchsvollen optischen Eigenschaften kostengünstig und schnell zu erfassen. Dies kann insbesondere schritthaltend zu einem Produktionstakt geschehen.

Unter einer "Beleuchtungseinrichtung" wird insbesondere eine - insbesondere separat ansteuerbare - Einrichtung verstanden, die eingerichtet ist zur Emission elektromagnetischer Strahlung im sichtbaren Bereich, im Infrarot-Bereich und/oder im UV-Bereich. Die Beleuchtungseinrichtung ist vorzugsweise ansteuerbar in Hinblick auf eine Schaltzeit, insbesondere eine Leuchtdauer, eine Helligkeit, insbesondere eine Leucht- oder Strahldichte, und/oder ein emittiertes Farbspektrum. Die Beleuchtungseinrichtung kann genau eine Lichtquelle oder eine Mehrzahl von Lichtquellen aufweisen. Unter einer Lichtquelle wird insbesondere ein einzelnes Emissionselement, beispielsweise eine LED oder OLED, verstanden, welches elektromagnetische Strahlung emittieren kann. Die Lichtquelle kann punktförmig oder flächig ausgebildet sein.

Die wenigstens zwei Beleuchtungseinrichtungen sind bevorzugt auf der Abstrahlfläche angeordnet. Insbesondere sind sie bevorzugt an der Abstrahlfläche gehalten, vorzugsweise befestigt.

Die Abstrahlfläche ist bevorzugt einstückig ausgebildet, insbesondere insgesamt einteilig. Vorzugsweise weist die Vorrichtung eine einzige, einstückige Abstrahlfläche auf. Die wenigstens zwei Beleuchtungseinrichtungen sind dabei auf der einzigen, einstückigen Abstrahlfläche angeordnet. Insbesondere sind alle Beleuchtungseinrichtungen der Vorrichtung bevorzugt auf der einzigen, einstückigen Abstrahlfläche angeordnet.

Bei einem bevorzugten Ausführungsbeispiel ist die Abstrahlfläche als flexible Platine ausgebildet. Auf diese Weise ist es insbesondere möglich, eine Vielzahl verschiedener Formen für die Abstrahlfläche in einfacher Weise, insbesondere durch Biegen der Abstrahlfläche, bereitzustellen. Bevorzugt weist die Vorrichtung eine einzige, vorzugsweise flexible Platine als Abstrahlfläche auf, die einstückig ausgebildet ist.

Es wird ein Ausführungsbeispiel der Vorrichtung bevorzugt, bei welchem sich eine erste Beleuchtungseinrichtung der wenigstens zwei Beleuchtungseinrichtungen entlang einer ersten Richtung erstreckt, wobei sich eine zweite Beleuchtungseinrichtung der wenigstens zwei Beleuchtungseinrichtungen entlang einer zweiten Richtung erstreckt. Die erste und die zweite Richtung sind schräg zueinander orientiert. Besonders bevorzugt stehen die erste Richtung und die zweite Richtung senkrecht aufeinander. Mit Hilfe der Beleuchtungseinrichtung ist es in diesem Fall möglich, eine strukturierte Beleuchtung insbesondere entlang einer ersten, insbesondere kartesischen Richtung sowie entlang einer zweiten, insbesondere kartesischen Richtung, oder auch diagonal zu zwei insbesondere kartesischen Richtungen zu erzeugen. Es ist aber auch möglich, dass sich wenigstens eine der beiden Richtungen entlang einer gekrümmten Kurve - insbesondere im dreidimensionalen Raum - erstreckt, wobei die beiden Richtungen dann - insbesondere im Bereich eines tatsächlichen oder gedachten Schnittpunkts, der gegebenenfalls auch in einer gedachten Verlängerung zumindest einer Beleuchtungseinrichtung liegen kann, lokal schräg zueinander orientiert sind, insbesondere lokal senkrecht aufeinander stehen.

Es wird ein Ausführungsbeispiel der Vorrichtung bevorzugt, das sich durch eine Mehrzahl von Beleuchtungseinrichtungen auszeichnet, welche in Form von Zeilen und/oder in Form von Spalten auf der Abstrahlfläche angeordnet sind. Dabei sind die Beleuchtungseinrichtungen insbesondere spalten- und/oder zeilenweise unabhängig voneinander ansteuerbar. Auf diese Weise ist es möglich, sehr einfach, kostengünstig und schnell eine strukturierte Beleuchtung zu schaffen, welche insbesondere zeilen- und/oder spaltenweise verschiedene Helligkeiten aufweist. Dabei ist die Ansteuerung der Mehrzahl von Beleuchtungseinrichtungen einfach, weil diese spalten- und/oder zeilenweise angesteuert werden können.

Unter den Begriffen "Helligkeit" und "Helligkeitsverteilung" wird insbesondere eine Leuchtdichte - bevorzugt für sichtbares Licht - oder eine Strahldichte - bevorzugt für nichtsichtbare Strahlung, insbesondere Infrarot- oder Ultraviolett-Strahlung - verstanden.

Bei einem bevorzugten Ausführungsbeispiel der Vorrichtung ist vorgesehen, dass sich alle Beleuchtungseinrichtungen entlang einer gleichen Richtung erstrecken. Dabei kann es sich um eine kartesische Richtung, insbesondere also eine Längenkoordinate, um eine Winkelkoordinate, oder um eine Längenkoordinate in einem nicht-kartesischen Koordinatensystem, beispielsweise einem Zylinderkoordinatensystem handeln. Es ist dann möglich, durch Ansteuerung der verschiedenen Beleuchtungseinrichtungen wenigstens zwei verschiedene Beleuchtungsverteilungen entlang einer Richtung zu erzeugen, die zumindest lokal senkrecht auf der einen Richtung, in welcher sich die Beleuchtungseinrichtungen erstrecken, steht. Insbesondere ist es möglich, dass alle Beleuchtungseinrichtungen auf der Abstrahlfläche als Zeilen angeordnet sind, oder dass alle Beleuchtungseinrichtungen auf der Abstrahlfläche als Spalten angeordnet sind. Es sind dann insbesondere variierende Beleuchtungsverteilungen senkrecht zu den Spalten oder senkrecht zu den Zeilen durch Ansteuerung der Beleuchtungseinrichtungen erzeugbar.

Besonders wird ein Ausführungsbeispiel der Vorrichtung bevorzugt, bei welchem die Beleuchtungseinrichtungen nur als Zeilen und/oder Spalten, insbesondere nur als ganze Zeilen und/oder Spalten, ansteuerbar sind. Die Vorrichtung ist bevorzugt so ausgebildet, dass die Beleuchtungseinrichtungen ausschließlich als ganze Zeilen und/oder als ganze Spalten ansteuerbar sind. Besonders bevorzugt weist dabei wenigstens eine Beleuchtungseinrichtung als Spalte oder Zeile eine Mehrzahl von Strahlungs- oder Lichtquellen auf, die so miteinander verschaltet sind, dass die Beleuchtungseinrichtung nur insgesamt als ganze Zeile oder als ganze Spalte angesteuert werden kann. Dies vereinfacht die Bauweise der Vorrichtung erheblich, weil auf jegliche komplexe Ansteuerung und Variation von Helligkeit innerhalb der Zeilen und/oder Spalten verzichtet wird. Es erfolgt also insbesondere keine punktweise Ansteuerung einzelner Lichtquellen auf der Abstrahlfläche, sondern die Helligkeit auf der Abstrahlfläche wird lediglich in Form ganzer, einzelner Zeilen und/oder Spalten variiert. Damit ist es insbesondere möglich, Beleuchtungsverteilungen zu erzeugen, bei denen die Helligkeit, insbesondere die Leuchtdichte oder Strahldichte, senkrecht zu der ersten Richtung, in welcher sich die ersten Beleuchtungseinrichtungen erstrecken, und/oder senkrecht zu der zweiten Beleuchtungsrichtung, in der sich die zweiten Beleuchtungseinrichtungen erstrecken, variiert. Somit können insbesondere lineare, aber auch anderweitig geformte Beleuchtungsverteilungen beispielsweise in x- oder y-Richtung auf der Abstrahlfläche, oder auch diagonal zu der x- und y-Richtung geschaffen werden.

Die Begriffe "Zeilen", "Spalten", "zeilenweise" und "spaltenweise" werden hier und im folgenden insbesondere in einem verallgemeinerten Sinn verwendet. Dabei schließen die Begriffe selbstverständlich insbesondere kartesische Zeilen und Spalten ein. Die Begriffe schließen aber auch Zeilen und Spalten ein, die sich entlang anderer, nicht-kartesischer Richtungen, insbesondere entlang von Winkel- und/oder Längenkoordinaten nicht-kartesischer Koordinatensysteme, beispielsweise eines Polarkoordinatensystems, eines Zylinderkoordinatensystems oder eines sphärischen Koordinatensystems erstrecken. So können beispielsweise in einem Zylinderkoordinatensystem Beleuchtungseinrichtungen, die sich in Umfangsrichtung, also entlang des Azimuts erstrecken, in Axialrichtung gesehen benachbart, insbesondere nebeneinander angeordnete Zeilen bilden, wobei sich in Axialrichtung erstreckende, in Umfangsrichtung, also entlang des Azimuts gesehen, benachbart, insbesondere nebeneinander angeordnete Beleuchtungseinrichtungen generalisierte Spalten bilden können. Analog können sich Spalten und Zeilen beispielsweise in einem sphärischen Koordinatensystem entlang der Poldistanz einerseits und des Azimuts andererseits erstrecken.

Es wird auch ein Ausführungsbeispiel der Vorrichtung bevorzugt, das sich dadurch auszeichnet, dass die Beleuchtungseinrichtungen in Form konzentrischer Ringe auf der bevorzugt ebenen Abstrahlfläche angeordnet sind. Die Abstrahlfläche ist dann bevorzugt rund ausgebildet. Es ist möglich, dass sich die Beleuchtungseinrichtung in Form konzentrischer Kreise - vorzugsweise auf einer kreisrunden Abstrahlfläche - erstrecken. Es ist aber auch möglich, dass die konzentrischen Ringe oval, insbesondere elliptisch ausgebildet sind, wobei sie vorzugsweise gemeinsame Hauptachsen aufweisen. In diesem Fall ist die Abstrahlfläche bevorzugt oval ausgebildet. Besonders bevorzugt ist vorgesehen, dass jede Beleuchtungseinrichtung genau einen Ring darstellt.

Es wird auch ein Ausführungsbeispiel der Vorrichtung bevorzugt, dass sich dadurch auszeichnet, dass die wenigstens zwei Beleuchtungseinrichtungen in runder Anordnung, vorzugsweise in kreisrunder Anordnung, auf der bevorzugt ebenen Abstrahlfläche angeordnet sind, wobei die wenigstens zwei Beleuchtungseinrichtungen verschiedene Sektoren bilden. Bevorzugt ist die Abstrahlfläche rund, insbesondere kreisrund ausgebildet, wobei die wenigstens zwei Beleuchtungseinrichtungen verschiedene Sektoren auf der runden, vorzugsweise kreisrunden, Abstrahlfläche bilden. Es ist aber auch eine ovale Anordnung der Beleuchtungseinrichtungen auf der Abstrahlfläche möglich, und/oder es ist möglich, dass die Abstrahlfläche selbst oval ausgebildet ist. Jedenfalls verläuft eine - gedachte - Grenze zwischen zwei verschiedenen Beleuchtungseinrichtungen hier bevorzugt in radialer Richtung, nämlich als Sektorengrenze. Es ist möglich, dass sich wenigstens eine Beleuchtungseinrichtung in radialer Richtung erstreckt. Bevorzugt erstrecken sich alle Beleuchtungseinrichtungen in radialer Richtung.

Es ist also möglich, dass sich wenigstens eine Beleuchtungseinrichtung als generalisierte Zeile in einem Polarkoordinatensystem entlang der Winkelkoordinate erstreckt, wobei es insbesondere möglich ist, dass zwei oder mehr Beleuchtungseinrichtungen, die eine Mehrzahl solcher generalisierter Zeilen bilden, in radialer Richtung gesehen nebeneinander, insbesondere benachbart zueinander angeordnet sind. Alternativ oder zusätzlich ist es möglich, dass sich wenigstens eine Beleuchtungseinrichtung als generalisierte Spalte in einem Polarkoordinatensystem entlang der radialen Richtung erstreckt. Insbesondere ist es möglich, dass zwei oder mehr Beleuchtungseinrichtungen, die solche generalisierten Spalten bilden, in Umfangsrichtung, also in Richtung der Winkelkoordinate gesehen, nebeneinander, insbesondere zueinander benachbart, angeordnet sind. In dem ersten Fall bilden die Beleuchtungseinrichtungen insbesondere konzentrische Ringe, in dem zweiten Fall bilden sie insbesondere Sektoren auf der Abstrahlfläche. Besonders bevorzugt wird eine Kombination dieser Fälle bei einem Ausführungsbeispiel, welches eine Mehrzahl von Beleuchtungseinrichtungen aufweist, wobei wenigstens eine Beleuchtungseinrichtung sich entlang der Winkelkoordinate, insbesondere als generalisierte Zeile, erstreckt, wobei wenigstens eine zweite Beleuchtungseinrichtung sich entlang der radialen Richtung, insbesondere als generalisierte Spalte, erstreckt. Besonders bevorzugt ist eine matrixartige Anordnung von Beleuchtungseinrichtungen in einem Polarkoordinatensystem möglich, wobei zwei oder mehr Beleuchtungseinrichtungen sich in Form generalisierter Zeilen entlang der Winkelkoordinate erstrecken, wobei zusätzlich zwei oder mehr Beleuchtungseinrichtungen sich entlang der radialen Richtung in Form von generalisierten Spalten erstrecken. Es ist auch möglich, dass Beleuchtungseinrichtungen, welche genau eine Licht- oder Strahlungsquelle aufweisen, in einer entsprechenden Matrixanordnung eines Polarkoordinatensystems auf der Abstrahlfläche angeordnet sind, wobei diese Beleuchtungseinrichtungen dann bevorzugt als einzelne Pixel individuell ansteuerbar sind, insbesondere in Hinblick auf eine Helligkeit oder Leuchtdauer.

Es wird auch ein Ausführungsbeispiel bevorzugt, das sich dadurch auszeichnet, dass sich eine erste Beleuchtungseinrichtung der wenigstens zwei Beleuchtungseinrichtungen entlang einer ersten Winkelkoordinate erstreckt, wobei sich eine zweite Beleuchtungseinrichtung der wenigstens zwei Beleuchtungseinrichtungen entlang einer Längenkoordinate erstreckt. Diese Ausgestaltung wird besonders bevorzugt für eine in zumindest eine Richtung gekrümmte Abstrahlfläche, insbesondere für eine zylinderförmige oder zylinderabschnittsförmige Abstrahlfläche bevorzugt, wobei die Winkelkoordinate einen Azimut und die Längenkoordinate vorzugsweise eine Axialrichtung eines Zylinderkoordinatensystems auf der Abstrahlfläche darstellen.

Es wird auch ein Ausführungsbeispiel der Vorrichtung bevorzugt, bei welchem eine erste Beleuchtungseinrichtung der wenigstens zwei Beleuchtungseinrichtungen sich entlang einer ersten Winkelkoordinate erstreckt, wobei sich eine zweite Beleuchtungseinrichtung der wenigstens zwei Beleuchtungseinrichtungen entlang einer zweiten, von der ersten verschiedenen Winkelkoordinate erstreckt. Diese Ausgestaltung wird besonders bevorzugt für eine Abstrahlfläche, die in wenigstens zwei Richtungen gekrümmt ist, insbesondere für eine kugelförmige oder kugelabschnittsförmige Abstrahlfläche. Dabei ist bevorzugt die erste Winkelkoordinate ein Azimut, und die zweite Winkelkoordinate ist eine Poldistanz eines sphärischen Koordinatensystems auf der Abstrahlfläche.

Es wird auch ein Ausführungsbeispiel der Vorrichtung bevorzugt, das sich dadurch auszeichnet, dass die wenigstens eine Beleuchtungseinrichtung eine Mehrzahl entlang der Erstreckungsrichtung der Beleuchtungseinrichtung nebeneinander angeordneter Lichtquellen aufweist. Dies stellt eine besonders einfache und kostengünstige Realisierung der Beleuchtungseinrichtung dar, da diese aus einzelnen Lichtquellen zusammengesetzt sein kann. Insbesondere ist es möglich, dass die Lichtquellen als Leuchtdioden (LED) oder organischen Leuchtdioden (OLED) ausgebildet sind. Besonders bevorzugt ist die wenigstens eine Beleuchtungseinrichtung in Form einer Zeile oder Spalte von nebeneinander angeordneten Lichtquellen, insbesondere Leuchtdioden, ausgebildet. Es ist möglich, dass die Lichtquellen im Wesentlichen punktförmig ausgebildet sind. Alternativ oder zusätzlich ist es möglich, dass flächige Lichtquellen verwendet werden. Insbesondere organische Leuchtdioden sind typischerweise als flächige Lichtquellen ausgebildet. Eine flächige Lichtquelle weist vorzugsweise die Form eines Rechtecks, insbesondere eines Quadrats, oder eine beliebige andere geometrische Umrandung auf. Besonders bevorzugt wird eine Geometrie für eine flächige Lichtquelle, mit der es möglich ist, die Abstrahlfläche mit einer Vielzahl solcher Lichtquellen vollständig zu pflastern. Dies ist insbesondere möglich mit rechteckigen, insbesondere quadratischen Lichtquellen, aber auch beispielsweise mit hexagonal umrandeten, flächigen Lichtquellen.

Es wird auch ein Ausführungsbeispiel der Vorrichtung bevorzugt, das sich dadurch auszeichnet, dass die wenigstens eine Beleuchtungseinrichtung genau eine und nur eine, insbesondere lokal konzentrierte, Strahlungsquelle aufweist, die wenigstens eine Lichtquelle umfasst. Dabei wird unter einer Strahlungsquelle eine lichtemittierende Einrichtung verstanden, die eine Lichtquelle oder eine Mehrzahl separater, insbesondere separat ansteuerbarer, Lichtquellen aufweist. Beispielsweise kann die Strahlungsquelle eine Mehrzahl von Lichtquellen aufweisen, die verschiedene Farben emittieren. Insbesondere ist es möglich, dass die Strahlungsquelle eine rote Lichtquelle, eine grüne Lichtquelle und eine blaue Lichtquelle aufweist. Auch andere Ausgestaltungen von Lichtquellen, insbesondere für eine additive Farbmischung des von der Strahlungsquelle emittierten Lichts, sind möglich.

Unter einer lokal konzentrierten Strahlungsquelle wird insbesondere eine Strahlungsquelle verstanden, die innerhalb eines gedachten Kreises angeordnet ist, der einen Radius aufweist, der sehr viel kleiner ist als eine Länge der Abstrahlfläche. Vorzugsweise ist der Durchmesser des gedachten Kreises um mindestens einen Faktor 10, vorzugsweise um einen Faktor 10 bis 100, kleiner als eine Erstreckung der Abstrahlfläche entlang ihrer längsten Ausdehnung. Insbesondere handelt es sich bei der lokal konzentrierten Strahlungsquelle um eine punktförmige Strahlungsquelle, die sich mithin in höchstens unerheblicher Weise entlang einer bestimmten Richtung erstreckt und vielmehr - auf die gesamte Abstrahlfläche gesehen - einen punktförmiger Emitter bildet.

Bei einem Ausführungsbeispiel der Vorrichtung ist es möglich, dass eine solche Strahlungsquelle als integriertes, separat ansteuerbares Bauelement ausgebildet ist, welches wenigstens eine Lichtquelle, insbesondere wenigstens eine Leuchtdiode, und eine integrierte elektronische Schaltung zur Versorgung und Ansteuerung der wenigstens einen Lichtquelle aufweist, wobei die wenigstens eine Lichtquelle und die elektronische Schaltung integriert miteinander ausgebildet sind. Alternativ ist es möglich, dass die Strahlungsquelle aus wenigstens einer, separat von einer elektronischen Schaltung vorgesehenen, Lichtquelle und der elektronischen Schaltung, welche ihrerseits separat von der wenigstens einen Lichtquelle vorgesehen ist, zusammengesetzt ist. Es ist möglich, dass jeder Lichtquelle eine eigene elektronische Schaltung zugeordnet ist, sodass die Lichtquelle und die ihr zugeordnete elektronische Schaltung eine Strahlungsquelle bilden. Es ist aber auch möglich, dass eine elektronische Schaltung vorgesehen ist, die den Lichtquellen insgesamt, insbesondere allen Lichtquellen gemeinsam, zugeordnet ist, wobei bevorzugt gleichwohl mittels der elektronischen Schaltung jede Lichtquelle separat und unabhängig von den anderen Lichtquellen ansteuerbar ist. In diesem Fall weist eine einzelne Strahlungsquelle eine Lichtquelle sowie dieser zuordenbare elektrische Anschlüsse oder Zuleitungen, insbesondere als der Lichtquelle individuell zuordenbare Teile der elektronischen Schaltung, auf.

Bei einem bevorzugten Ausführungsbeispiel weist die Vorrichtung genau zwei Platinen auf, nämlich eine erste Platine, auf welcher bevorzugt die Lichtquellen und/oder Strahlungsquellen angeordnet sind, und eine zweite Platine, auf welcher bevorzugt die wenigstens eine elektronische Schaltung angeordnet ist. Alternativ oder zusätzlich ist bevorzugt eine Steuereinrichtung zur Beleuchtungssteuerung, insbesondere zur Vorgabe von Helligkeiten für die Strahlungs- und/oder Lichtquellen auf der zweiten Platine angeordnet. Es ist möglich, dass wenigstens eine elektronische Schaltung oder elektronische Schaltungen für die Licht- und/oder Strahlungsquellen, welche durch die Steuereinrichtung ansteuerbar ist/sind, insbesondere gemeinsam mit den Licht- und/oder Strahlungsquellen auf der ersten Platine angeordnet ist/sind. Die Platinen sind vorzugsweise in einer Richtung, die senkrecht auf gedachten Ebenen der Platinen steht, voneinander beabstandet, also hintereinander, angeordnet. Vorzugsweise ist zumindest eine der Platinen flexibel ausgebildet. Besonders bevorzugt sind beide Platinen flexibel ausgebildet.

Einzelne Strahlungsquellen der Vorrichtung sind vorzugsweise miteinander verschaltbar, insbesondere kaskadierbar. Dabei ist es möglich, dass entlang einer Richtung angeordnete Strahlungsquellen miteinander verschaltet, insbesondere kaskadiert werden. Alternativ oder zusätzlich ist es möglich, dass Strahlungsquellen entlang verschiedener Richtungen miteinander kaskadiert werden. Insbesondere ist es auch möglich, dass alle Strahlungsquellen der Vorrichtung kaskadiert miteinander vorgesehen sind. Dabei spricht eine kaskadierte Anordnung insbesondere an, dass Strahlungsquellen, die kaskadiert miteinander angeordnet sind, bezüglich einer Datenleitung oder Ansteuerleitung miteinander verschaltet sind, wobei die Strahlungsquellen bevorzugt parallel zueinander oder hintereinander geschaltet sind, wobei insbesondere ein Steuerausgang einer entlang einer Reihe miteinander verschalteter Strahlungsquellen vorangehenden Strahlungsquelle mit einem Steuereingang einer nachfolgenden Strahlungsquelle verbunden ist. Die Strahlungsquellen sind vorzugsweise gleichwohl ausgebildet, um separat voneinander und insbesondere unabhängig voneinander angesteuert zu werden, insbesondere durch speziell hierfür vorgesehene Bitmuster auf einer Datenleitung und/oder durch individuelle Adressierung der einzelnen Strahlungsquellen. Dabei ist insbesondere eine Farbe, eine Helligkeit und/oder eine Einschaltzeit oder Leuchtdauer der einzelnen Strahlungsquellen unabhängig von den anderen Strahlungsquellen wähl- oder vorgebbar.

Es ist möglich, dass die Lichtquellen oder Strahlungsquellen, die im Folgenden auch allgemein als "Quellen" bezeichnet werden, entlang wenigstens einer Richtung gesehen äquidistant zueinander angeordnet sind. Dies kann allerdings insbesondere dann, wenn wenigstens eine Richtung sich entlang einer gekrümmten Linie erstreckt, zu einer inhomogenen Anzahldichte der Quellen auf der Abstrahlfläche führen. Ist beispielsweise eine Anordnung der Quellen in Form konzentrischer Ringe vorgesehen, die in radialer Richtung und in Richtung eines Winkels äquidistant angeordnet sind, führt dies zu einer zunehmenden Anzahldichte der Quellen zu einem Zentrum der Anordnung hin. Es ist daher alternativ auch möglich, dass die Quellen -unabhängig von dem betrachteten Koordinatensystem - mit einer über die Abstrahlfläche konstanten Anzahldichte angeordnet sind. Dies kann gegebenenfalls - wie zuvor ausgeführt - eine nichtäquidistante Anordnung der Quellen entlang zumindest einer Richtung bedingen.

Es ist aber auch möglich, dass die Anzahldichte der Quellen auf der Abstrahlfläche bedarfsgerecht angepasst ist, insbesondere an eine konkrete Beleuchtungsaufgabe. Die Anzahldichte der Quellen kann also bevorzugt entlang der Abstrahlfläche variieren. Beispielsweise ist es möglich, eine geringere Anzahldichte von Quellen im Bereich eines Zentrums der Abstrahlfläche vorzusehen.

Für die Anordnung von Quellen auf nicht-ebenen oder gekrümmten Abstrahlflächen sind verschiedene Vorgehensweisen und insbesondere verschiedene Projektionsmethoden möglich. Beispielsweise ist es möglich, gedachte Quellen bei einer kegel- oder kegelabschnittsförmigen Abstrahlfläche zunächst äquidistant in Zeilen und Spalten auf einer gedachten, bestrahlten ebene, insbesondere einer Fußebene der kegel- oder kegelabschnittsförmigen Geometrie anzuordnen, und diese Anordnung gedachter Quellen dann auf eine innere oder äußere Kegelmantelfläche, mithin auf die Abstrahlfläche, zu projizieren, wobei dann die tatsächlichen Quellen an den Orten der projizierten, gedachten Quellen angeordnet werden. Eine analoge Vorgehensweise ist auch für eine Sektorendarstellung oder konzentrische Kreise auf der gedachten, bestrahlten Ebene möglich. Eine analoge Vorgehensweise ist auch für eine kugel- oder kugelabschnittsförmige Abstrahlfläche möglich, wobei eine gedachte Anordnung von gedachten Quellen auf einer Schnittebene, insbesondere auf einer äquatorialen Ebene oder einer Ebene, in welcher ein Großkreis liegt, äquidistant, insbesondere zeilen- oder spaltenweise, oder mit gleichen Winkelabständen in wenigstens einer Winkelrichtung, oder in anderer Weise, angeordnet und dann auf die Abstrahlfläche projiziert werden kann. Dabei sind insbesondere auch verschiedene Projektionsmethoden denkbar, insbesondere im Sinne einer Rückprojektion. Ein Beispiel wäre beispielsweise eine umgekehrte Mercatorprojektion einer ebenen Verteilung auf eine Kugelfläche. Ähnliche Projektionsmethoden sind auch für Freiformflächen denkbar.

Allgemein wird bevorzugt eine gedachte Anordnung gedachter Quellen in einer gedachten - nicht gekrümmten - Ebene - in Abstrahlrichtung gesehen - unterhalb der Abstrahlfläche, insbesondere in einer von der Vorrichtung beleuchteten, gedachten Ebene, vorgesehen, wobei diese Verteilung von gedachten Quellen dann auf die Abstrahlfläche projiziert wird, wobei dann die tatsächlichen Quellen an den Orten der projizierten, gedachten Quellen angeordnet werden.

Bei einem Ausführungsbeispiel der Vorrichtung ist vorgesehen, dass eine Mehrzahl von Beleuchtungseinrichtungen, die jeweils genau eine und nur eine Strahlungsquelle aufweisen, matrixartig auf der Abstrahlfläche angeordnet ist. Dabei sind die einzelnen Beleuchtungseinrichtungen vorzugsweise unabhängig voneinander als einzelne Pixel der matrixartigen Anordnung, insbesondere mit vorgebbarer Helligkeit oder Leuchtdauer, ansteuerbar. Unter einer matrixartigen Anordnung wird insbesondere eine geordnete Anordnung von Elementen entlang von wenigstens zwei Koordinaten verstanden, wobei die Koordinaten kartesische Koordinaten, aber auch Polar-, Zylinder-, sphärische oder andere Koordinaten sein können.

Es ist aber auch ein Ausführungsbeispiel der Vorrichtung möglich, bei dem Beleuchtungseinrichtungen frei, insbesondere nicht äquidistant, oder sogar irregulär, auf der Abstrahlfläche angeordnet sind, wobei die Beleuchtungseinrichtungen vorzugsweise unabhängig voneinander, insbesondere mit vorgebbarer Helligkeit oder Leuchtdauer, ansteuerbar sind.

Es wird auch ein Ausführungsbeispiel der Vorrichtung bevorzugt, das sich dadurch auszeichnet, dass unmittelbar benachbarte Licht- oder Strahlungsquellen und/oder unmittelbar benachbarte Beleuchtungseinrichtungen in einem Abstand - insbesondere von einem Mittelpunkt, Schwerpunkt oder Zentrum zu einem nächsten Mittelpunkt, Schwerpunkt oder Zentrum der Quellen oder Beleuchtungseinrichtungen gemessen - von wenigstens 0,5 mm bis höchstens 200 mm, vorzugsweise von wenigstens 1 mm bis höchstens 100 mm, vorzugsweise von wenigstens 2 mm bis höchstens 50 mm, vorzugsweise von wenigstens 5 mm bis höchstens 20 mm, vorzugsweise von 10 mm, aufweisen. Als Abstand wird also bevorzugt ein Mittenabstand betrachtet, das heißt ein Abstand von einem Mittelpunkt, Schwerpunkt oder Zentrum einer Quelle zu einem nächsten Mittelpunkt, Schwerpunkt oder Zentrum einer nächsten, benachbarten Quelle. Die Angabe eines solchen Abstands schließt nicht aus, dass benachbarte Quellen, insbesondere flächig ausgebildete, benachbarte Quellen, an ihren Rändern direkt aneinander angrenzen. Es ist aber auch möglich, dass benachbarte Quellen im Bereich ihrer Ränder voneinander beabstandet sind.

Der Abstand, insbesondere der Mittenabstand, beträgt bevorzugt von wenigstens 1 mm bis höchstens 200 mm, vorzugsweise von wenigstens 2 mm bis höchstens 200 mm, vorzugsweise von wenigstens 5 mm bis höchstens 200 mm, vorzugsweise von wenigstens 10 mm bis höchstens 200 mm.

Der Abstand, insbesondere der Mittenabstand, beträgt bevorzugt von wenigstens 1 mm bis höchstens 50 mm, vorzugsweise von wenigstens 1 mm bis höchstens 20 mm, vorzugsweise von wenigstens 1 mm bis höchstens 10 mm.

Bei einem bevorzugten Ausführungsbeispiel der Vorrichtung beträgt ein Flächenmaß der Abstrahlfläche, also die Fläche der Abstrahlfläche, von wenigstens 100 mm² bis höchstens 1 m², vorzugsweise von wenigstens 100 mm² bis höchstens 0,5 m², vorzugsweise von wenigstens 100 mm² bis höchstens 0,2 m², vorzugsweise von wenigstens 100 mm² bis höchstens 0,1 m².

Bevorzugt beträgt die Abstrahlfläche von wenigstens 0,02 m² bis höchstens 0,25 m², vorzugsweise von wenigstens 0,05 m² bis höchstens 0,25 m², vorzugsweise von wenigstens 0,1 m² bis höchstens 0,25 m², vorzugsweise von wenigstens 0,2 m² bis höchstens 0,25 m².

Dies wird insbesondere bevorzugt in Zusammenhang mit einer Vorrichtung, welche eine Mehrzahl von Beleuchtungseinrichtungen aufweist, die einerseits in Form von Zeilen und andererseits in Form von Spalten angeordnet sind, wobei sich letztlich eine matrixartige Anordnung von Lichtquellen ergibt, die jeweils einen Abstand in der genannten Größe voneinander aufweisen. Damit wird bewusst auf eine feinere Rasterung von Lichtquellen verzichtet, weil dies für eine effiziente Beleuchtung von Gegenständen mit dem Ziel, selbst feinste Fehler auch bei anspruchsvollen optischen Eigenschaften zu erfassen, nicht nötig ist. Vielmehr genügt eine vergleichsweise grobe Rasterung der Lichtquellen zu diesem Zweck, sodass eine insgesamt einfach aufgebaute, strukturierte und kostengünstige Vorrichtung zur Verfügung gestellt werden kann. Die derart angeordneten Beleuchtungseinrichtungen sind vorzugsweise unabhängig voneinander - insbesondere als ganze Zeilen und/oder Spalten - ansteuerbar. Dabei wird insbesondere bevorzugt auf eine individuelle Ansteuerung der einzelnen Lichtquellen verzichtet, also bevorzugt keine matrixartige Ansteuerung einzelner Lichtpunkte realisiert. Vielmehr sind allein ganze Zeilen und/oder Spalten von Lichtquellen individuell und unabhängig voneinander ansteuerbar, wobei alle Lichtquellen einer Zeile und/oder Spalte gemeinsam angesteuert werden. Dies reduziert drastisch die Komplexität der Ansteuerung der Vorrichtung, sodass diese kostengünstiger wird, wobei insbesondere höhere Ansteuerfrequenzen möglich werden. Somit können auch hochfrequente Wechsel von Beleuchtungsverteilungen möglich werden, was insbesondere eine Prüfung von Bauteilen schritthaltend zum Produktionstakt ermöglicht.

Es wird auch ein Ausführungsbeispiel der Vorrichtung bevorzugt, das sich dadurch auszeichnet, dass wenigstens zwei Gruppen von Beleuchtungseinrichtungen vorgesehen sind, wobei eine erste Gruppe von Beleuchtungseinrichtungen als Spalten und eine zweite Gruppe von Beleuchtungseinrichtung als Zeilen auf der Abstrahlfläche angeordnet und ansteuerbar sind. In diesem Fall ist nicht etwa jede Lichtquelle einer Beleuchtungseinrichtung einerseits einer Zeile und andererseits einer Spalte zugeordnet, wie dies bei einer matrixartigen Anordnung von Lichtquellen der Fall ist, sondern es sind vielmehr individuelle Gruppen von Lichtquellen zu als Zeilen ansteuerbaren Beleuchtungseinrichtungen zusammengefasst, während andere individuelle Gruppen von Lichtquellen als Beleuchtungseinrichtungen zusammengefasst sind, welche als Spalten ansteuerbar sind. Eine solche Ausgestaltung reduziert wiederum die Komplexität der Vorrichtung und ihre Ansteuerung und ermöglicht es außerdem insbesondere, auch diagonal verlaufende Beleuchtungsverteilungen, die sich schräg zu den Zeilen und Spalten erstrecken, darzustellen, ohne das Prinzip der nur zeilen- und/oder spaltenweisen Ansteuerung der Beleuchtungseinrichtung verlassen zu müssen. Es ist nämlich ohne weiteres möglich, die Zeilen und Spalten unabhängig voneinander - quasi überlagert - derart anzusteuern, dass insgesamt eine diagonal verlaufende Beleuchtungsverteilung entsteht.

Es wird auch ein Ausführungsbeispiel der Vorrichtung bevorzugt, das sich dadurch auszeichnet, dass eine Steuereinrichtung vorgesehen ist, die eingerichtet ist zur Ansteuerung der Beleuchtungseinrichtungen. Somit werden insbesondere die bereits genannten Vorteile realisiert. Die Steuereinrichtung ist insbesondere eingerichtet, um durch Ansteuerung der Beleuchtungseinrichtungen die wenigstens zwei verschiedenen Beleuchtungsverteilungen zu erzeugen. Dabei ist die Steuerungseinrichtung bevorzugt eingerichtet zur separaten, unabhängigen Ansteuerung der Beleuchtungseinrichtungen voneinander. Besonders bevorzugt ist die Steuereinrichtung eingerichtet zur zeilen- und/oder spaltenweisen Ansteuerung der Beleuchtungseinrichtung. Damit werden insbesondere die bereits genannten Vorteile einer zeilen- und/oder spaltenweisen Ansteuerung realisiert. Die Steuereinrichtung ist bevorzugt darauf abgestimmt, ausschließlich ganze Zeilen und/oder ganze Spalten von Beleuchtungseinrichtungen anzusteuern, wobei die Steuereinrichtung einfach aufgebaut und zugleich hochfrequent betreibbar sein kann. Insbesondere wird bevorzugt ausdrücklich auf eine pixelweise Ansteuerung von auf der Abstrahlfläche angeordneten Lichtquellen verzichtet. Vielmehr werden diese ausschließlich als ganze Zeilen und/oder als ganze Spalten, insbesondere als ganze Zeilen und ganze Spalten, angesteuert.

Es wird auch ein Ausführungsbeispiel der Vorrichtung bevorzugt, das sich dadurch auszeichnet, dass die Vorrichtung eingerichtet ist zum Wechsel zwischen verschiedenen Beleuchtungsverteilungen mit einer Frequenz von mindestens 150 Hz bis höchstens 2 MHz, vorzugsweise von mindestens 500 Hz bis höchstens 1 MHz, vorzugsweise von mindestens 2 kHz bis höchstens 200 kHz, vorzugsweise von mindestens 10 kHz bis höchstens 50 kHz, vorzugsweise von 25 kHz. Es zeigt sich, dass insbesondere aufgrund der sehr einfachen Ausgestaltung der Vorrichtung und der einfachen Ansteuerbarkeit einzelner Zeilen und/oder Spalten eine hochfrequente Ansteuerung mittels der Steuereinrichtung möglich ist.

Die Vorrichtung ist bevorzugt eingerichtet zum Wechsel zwischen verschiedenen Beleuchtungsverteilungen mit einer Frequenz von mindestens 500 Hz bis höchstens 2 MHz, vorzugsweise von mindestens 2 kHz bis höchstens 2 MHz, vorzugsweise von mindestens 10 kHz bis höchstens 2 MHz, vorzugsweise von mindestens 25 kHz bis höchstens 2 MHz. Vorzugsweise ist die Vorrichtung eingerichtet zum Wechsel zwischen verschiedenen Beleuchtungsverteilungen mit einer Frequenz von mindestens 150 Hz bis höchstens 1 MHz, vorzugsweise von mindestens 150 Hz bis höchstens 200 kHz, vorzugsweise von mindestens 150 kHz bis höchstens 50 kHz, vorzugsweise von mindestens 150 Hz bis höchstens 25 kHz.

Erfindungsgemäß ist die Steuereinrichtung eingerichtet zur Variation der Helligkeit der Beleuchtungseinrichtungen durch Vorgabe einer Leuchtzeit. Die Helligkeit einer einzelnen Beleuchtungseinrichtung, insbesondere einer Zeile oder einer Spalte , wird in diesem Fall nicht durch Variationen einer elektrischen Ansteuergröße, insbesondere also einer Spannung oder einer Stromstärke, für die Beleuchtungseinrichtung gewählt, sondern vielmehr über die Schaltzeit, insbesondere über eine Einschaltzeit, die auch als Leuchtzeit bezeichnet wird. Dazu wird eine Zeit bestimmt, die als Leuchtzeit einer Helligkeit von 100% entspricht, und die im Folgenden als Maximal-Leuchtzeit bezeichnet wird. Erfindungsgemäß wird die Helligkeit einzelner Beleuchtungseinrichtungen, insbesondere Zeilen und/oder Spalten, dann von 0% bis 100% variiert, indem die Leuchtzeit für die einzelnen Beleuchtungseinrichtungen individuell zwischen 0% und 100% der Maximal-Leuchtzeit gewählt wird. Die Maximal-Leuchtzeit entspricht einer vorbestimmten Belichtungszeit einer Kamera, mit welcher Bilder eines mittels der Vorrichtung beleuchteten Gegenstands aufgenommen werden können.

Dabei entsteht die individuelle Helligkeit der verschiedenen Beleuchtungseinrichtungen insbesondere durch Integration über die Belichtungszeit, mithin über die Maximal-Leuchtzeit. Je kürzer die Leuchtzeit einer individuellen Beleuchtungseinrichtung ist, desto geringer erscheint die von dieser erzeugte Helligkeit in einem aufgenommen Bild. Eine solche Ansteuerung erweist sich als besonderes einfach und kostengünstig in einer Steuereinrichtung umsetzbar. Vorzugsweise ist die Steuereinrichtung mit einer Kamera zur Bildaufnahme wirkverbunden, damit die Maximal-Leuchtzeit gleich der Belichtungszeit gewählt werden kann. Vorzugsweise weist die Steuereinrichtung wenigstens eine Schnittstelle zur Wirkverbindung mit wenigstens einer Kamera auf. Besonders bevorzugt ist die Steuereinrichtung eingerichtet, um die Ansteuerung der Beleuchtungseinrichtungen mit der Belichtungszeit der Kamera zu synchronisieren. Erfindungsgemäß ist die Steuereinrichtung eingerichtet, um die Kamera und die Beleuchtungseinrichtungen miteinander zu synchronisieren.

Die Einstellung der Helligkeit der Beleuchtungseinrichtungen durch Vorgabe einer Leuchtzeit ist gegenüber einer Variation einer Stromgröße, insbesondere einer Stromstärke, vorteilhaft, weil hierbei eine wesentlich geringere Wärmeabfuhr nötig ist, als wenn insbesondere eine individuelle Stromregelung für jede Beleuchtungseinrichtung vorgesehen wäre. Die Vorrichtung kann daher effizienter ausgestaltet sein und kleiner bauen. Insbesondere kann die Größe von Kühlkörpern verringert werden, oder es kann auf Kühlkörper verzichtet werden.

Die Vorrichtung ist bevorzugt eingerichtet, um die Beleuchtungseinrichtungen in digitaler Weise zu schalten, also ein- oder auszuschalten, ohne eine Bestromung der Beleuchtungseinrichtungen in Hinblick auf eine Stromgröße, insbesondere eine Spannung oder eine Stromstärke, im oder für den eingeschalteten Zustand der Beleuchtungseinrichtungen individuell zu variieren.

Es wird auch ein Ausführungsbeispiel der Vorrichtung bevorzugt, das sich dadurch auszeichnet, dass vor der Abstrahlfläche - in Richtung auf einen zu beleuchteten Gegenstand hin, mithin in Abstrahlrichtung des Lichts von der Abstrahlfläche aus gesehen - ein Streuelement angeordnet ist. Das Streuelement dient dazu, die durch die Beleuchtungseinrichtung erzeugte Beleuchtungsverteilung zu homogenisieren oder zu glätten, und insbesondere die an den Positionen einzelner Lichtquellen erzeugten Beleuchtungsspitzen zu nivellieren und das relativ punktuell durch die Lichtquellen abgestrahlte Licht flächig zu verteilen. Dabei wird ein Abstand des Streuelements von der Abstrahlfläche und insbesondere von den einzelnen Lichtquellen bevorzugt so gewählt, dass eine möglichst homogene, glatte Beleuchtungsverteilung zwischen den einzelnen Lichtquellen gegeben ist.

Bevorzugt beträgt der Abstand des Streuelements von der Abstrahlfläche - insbesondere senkrecht zu der Abstrahlfläche und/oder dem Streuelement gemessen - von wenigstens 0,5 mm bis höchstens 200 mm, vorzugsweise von wenigstens 1 mm bis höchstens 100 mm, vorzugsweise von wenigstens 2 mm bis höchstens 50 mm, vorzugsweise von wenigstens 5 mm bis höchstens 20 mm, vorzugsweise 10 mm. Bei einem bevorzugten Ausführungsbeispiel beträgt der Abstand des Streuelements von der Abstrahlfläche von wenigstens 1 mm bis höchstens 200 mm, vorzugsweise von wenigstens 1 mm bis höchstens 50 mm, vorzugsweise von wenigstens 1 mm bis höchstens 20 mm, vorzugsweise von wenigstens 1 mm bis höchstens 10 mm. Bei einem bevorzugten Ausführungsbeispiel der Vorrichtung beträgt der Abstand des Streuelements von der Abstrahlfläche vorzugsweise von wenigstens 2 mm bis höchstens 200 mm, vorzugsweise von wenigstens 5 mm bis höchstens 200 mm, vorzugsweise von wenigstens 10 mm bis höchstens 200 mm.

Bevorzugt wird der Abstand des Streuelements von der Abstrahlfläche gleich dem Abstand zwischen den einzelnen Quellen, insbesondere Lichtquellen oder Strahlungsquellen, auf der Abstrahlfläche gewählt.

Das Streuelement ist bevorzugt als Streukörper, insbesondere als diffus streuende Platte, als diffus streuende Folie, oder in anderer geeigneter Weise ausgebildet.

Es wird ein Ausführungsbeispiel der Vorrichtung bevorzugt, das sich dadurch auszeichnet, dass die Abstrahlfläche an einer transparenten Platte ausgebildet ist, wobei an wenigstens zwei Rändern der transparenten Platte je eine Beleuchtungseinrichtung derart angeordnet ist, dass von der Beleuchtungseinrichtung emittierte Strahlung in die transparente Platte eingekoppelt wird. Die transparente Platte erstreckt sich somit insbesondere entlang einer gedachten Ebene, wobei sie Ränder aufweist, an denen Strahlung in die transparente Platte eingekoppelt wird. Besonders bevorzugt weist die transparente Platte vier Randabschnitte oder vier Ränder auf, wobei an den Randabschnitten oder Rändern vier Beleuchtungseinrichtungen angeordnet sind, die unabhängig voneinander ansteuerbar sind. Ist die Abstrahlfläche an einer solchen transparenten Platte außen angeordnet, erübrigt es sich, auf der Abstrahlfläche selbst eine Mehrzahl von Lichtquellen oder Beleuchtungseinrichtungen anzuordnen. Die derart gebildete Vorrichtung ist also besonders einfach und kostengünstig aufgebaut.

Die transparente Platte ist bei einem bevorzugten Ausführungsbeispiel als klartransparente Platte ausgebildet. Bei einem anderen Ausführungsbeispiel ist es möglich, dass die transparente Platte als diffus streuende Platte - insbesondere als Volumenstreuelement - ausgebildet ist.

Es wird ein Ausführungsbeispiel der Vorrichtung bevorzugt, das sich dadurch auszeichnet, dass die transparente Platte eine Auskoppelstruktur aufweist. Dies wird besonders bevorzugt bei einer klartransparenten Platte, die selbst intrinsisch, insbesondere in ihrem Volumen, keine relevanten Streuzentren aufweist. Typischerweise kann in die transparente Platte seitlich an den Rändern eingekoppelte Strahlung die Platte nicht ohne weiteres verlassen, sodass die Strahlung in der Platte zwischen der Abstrahlfläche einerseits und einer gegenüberliegenden Grenzfläche andererseits hin und her reflektiert wird. Es wird nun vorzugsweise eine Auskoppelstruktur vorgesehen, um Strahlung von der Abstrahlfläche abstrahlen zu können. Mittels der Auskoppelstruktur wird in einfacher und kostengünstiger Weise im Bereich der Abstrahlfläche eine diffuse Streuung erzeugt. Vorzugsweise ist die Auskoppelstruktur an der Abstrahlfläche vorgesehen. Vorzugsweise wird die Auskoppelstruktur durch Aufrauen der Abstrahlfläche und/oder durch Aufbringen einer diffus streuenden Folie auf die Abstrahlfläche, bereitgestellt. Es ist auch möglich, feine geometrische Strukturen in der Abstrahlfläche vorzusehen, beispielsweise ein Muster von Linien, Punkten oder anderweitigen Störungen der Oberfläche der transparenten Platte. Hierbei kann es sich insbesondere um gezielt eingebrachte Defekte handeln. Es ist zusätzlich oder alternativ auch möglich, dass die Auskoppelstruktur an der der Abstrahlfläche gegenüberliegenden Grenzfläche angeordnet ist. Insbesondere ist es möglich, dass an der gegenüberliegenden Grenzfläche einzelne Streuzentren, insbesondere einzelne Punkte, angeordnet sind, welche Licht in Richtung der Abstrahlfläche streuen. Solche Punkte können beispielsweise in Form einer Folie auf die gegenüberliegende Grenzfläche aufgebracht werden und/oder aus insbesondere punkt- oder kreisförmigen Folienabschnitten bestehen. Auch andere Geometrien für solche Streuzentren sind möglich. Die auf der gegenüberliegenden Grenzfläche angeordneten Streuzentren sind vorzugsweise auf einer der Abstrahlfläche zugewandten Seite weiß und weisen somit in diese Richtung ein erhöhtes Streuvermögen auf. Auf einer der Abstrahlfläche abgewandten Seite sind die Streuzentren vorzugsweise schwarz, um eine Lichtstreuung, insbesondere von Umgebungslicht, in eine auf einer dem beleuchteten Gegenstand und der Abstrahlfläche abgewandten Seite angeordneten Kamera zu vermeiden. Ist die transparente Platte bis auf die Streuzentren klartransparent ausgebildet, ist es möglich, dass die Kamera einen jenseits der Platte auf der Seite der Abstrahlfläche angeordneten Gegenstand ohne jegliche besondere Sichtöffnung oder einen explizit vorgesehenen Sichtbereich, direkt durch die klartransparente Platte beobachtet. Insbesondere wenn die klartransparente Platte nicht in einer Fokalebene der Kamera angeordnet ist, stören nämlich die Streuzentren das entstehende Kamerabild nur wenig und bevorzugt höchstens in für die weitere Auswertung des Kamerabilds irrelevanter Weise.

Vorzugsweise ist auf der der Abstrahlfläche abgewandten Seite der Vorrichtung ein Abschirmelement vorgesehen, welches angeordnet und eingerichtet ist, um zu verhindern, dass Streulicht aus der Vorrichtung und/oder Streulicht aus einer Umgebung der Vorrichtung in eine Optik, insbesondere eine Kamera, gelangt. Das Abschirmelement kann direkt auf der der Abstrahlfläche gegenüberliegenden Grenzfläche angeordnet, insbesondere an dieser befestigt, oder von dieser Grenzfläche beabstandet angeordnet sein. Insbesondere ist es möglich, dass das Abschirmelement als Folie ausgebildet ist, welche - gegebenenfalls auch in Form einzelner Punkte - auf der Grenzfläche angeordnet, insbesondere auf die Grenzfläche aufgeklebt ist. Dabei ist es möglich, dass diese Folie auf ihrer der Abstrahlfläche zugewandten Seite weiß und auf ihrer der Abstrahlfläche abgewandten Seite schwarz ausgebildet ist. Zusätzlich oder alternativ kann ein als Abschattungselement ausgebildetes Abschirmelement vorgesehen sein, insbesondere in einem Abstand zu der Grenzfläche. Dieses kann beispielsweise in Form eines Schirms oder in anderer geeigneter Weise ausgestaltet sein.

Es wird auch ein Ausführungsbeispiel der Vorrichtung bevorzugt, das sich dadurch auszeichnet, dass die Abstrahlfläche einen Sichtbereich aufweist, wobei bevorzugt in der Abstrahlfläche ein Sichtbereich ausgebildet ist. Es kann in einfacher Weise eine Optik, beispielsweise ein Objektiv und/oder eine Kamera, so relativ zu dem Sichtbereich positioniert werden, dass ein mittels der Vorrichtung zur flächigen Beleuchtung beleuchteter Gegenstand mit der Optik durch den Sichtbereich beobachtbar ist. Der Sichtbereich weist vorzugsweise eine Apertur auf, welche einem Außendurchmesser der Optik und/oder der Kamera entspricht oder höchstens geringfügig größer ausgebildet ist. Es ist aber auch möglich, dass der Sichtbereich größer ist als die Apertur, insbesondere wenn ein Abstand des Sichtbereichs zu der Kamera oder einem Objektiv größer ist als die Apertur. Umgekehrt ist es auch möglich, dass der Sichtbereich kleiner ist als die Apertur, insbesondere bei einem engen Abstand zwischen der Kamera oder dem Objektiv und dem Sichtbereich, wobei insbesondere das Maß einer Blende der Kamera oder des Objektivs relevant ist für die Bemessung des Sichtbereichs. Vorzugsweise ist der Sichtbereich zentral oder mittig in oder an der Abstrahlfläche angeordnet. Es ist aber auch möglich, dass der Sichtbereich außermittig angeordnet ist. Weiterhin ist es möglich, dass die Abstrahlfläche mehr als einen Sichtbereich, insbesondere zur Anordnung einer Mehrzahl von Kameras oder Optiken, aufweist.

Unter einem Sichtbereich wird hier insbesondere ein Bereich verstanden, durch welchen hindurch ein - aus Sicht der Kamera oder des Objektivs gesehen - jenseits der Abstrahlfläche angeordneter Gegenstand von der Kamera oder dem Objektiv beobachtbar ist. Dieser Bereich lässt also insbesondere von dem Gegenstand ausgehendes Licht zu der Kamera oder dem Objektiv durch. Es ist möglich, dass der Sichtbereich als nicht-streuender Bereich einer Abstrahlfläche vorgesehen ist, auf der im übrigen Streuzentren vorgesehen sind. Insbesondere ist es möglich, dass der Sichtbereich als unbehandelter Bereich einer transparenten, insbesondere klartransparenten Platte an der Abstrahlfläche vorgesehen ist. Alternativ ist es möglich, dass der Sichtbereich als Sichtöffnung in der Abstrahlfläche ausgebildet ist. In diesem Fall weist die Abstrahlfläche vorzugsweise eine Ausnehmung oder Aussparung, insbesondere nach Art einer Durchgangsbohrung, auf, die als Sichtöffnung dient, und durch welche ein Gegenstand von der Kamera oder dem Objektiv beobachtet werden kann. Die Abstrahlfläche ist vorzugsweise nur außerhalb des Sichtbereichs streuend behandelt.

Es wird auch ein Ausführungsbeispiel der Vorrichtung bevorzugt, das sich dadurch auszeichnet, dass die Abstrahlfläche eben ausgebildet ist. Dies stellt eine sehr einfache Ausgestaltung dar. Alternativ ist es möglich, dass die Abstrahlfläche gebogen oder gekrümmt ausgebildet ist. Dabei kann die Abstrahlfläche insbesondere auf eine spezifische Aufgabe, für welche die Vorrichtung eingesetzt wird, insbesondere auf zu erfassende oder zu prüfende Bauteile abgestimmt sein. Insbesondere ist es möglich, dass die Abstrahlfläche zylinderförmig, zylinderabschnittsförmig, kegelförmig, kegelabschnittsförmig, kugelförmig, kugelabschnittsförmig, oder in Form einer Freiformfläche, vorzugsweise mit eckiger, insbesondere rechteckiger oder quadratischer, kreisförmiger, oder ovaler Umrandung, ausgebildet ist.

Schließlich wird ein Ausführungsbeispiel der Vorrichtung bevorzugt, das sich dadurch auszeichnet, dass die Lichtquellen einer Beleuchtungseinrichtung zumindest abschnittsweise miteinander in Reihe geschaltet sind. Damit ist es insbesondere möglich, eine elektrische Spannung zur Ansteuerung der Lichtquellen auf einen gewünschten Wert zu bringen, insbesondere falls eine einzelne Lichtquelle eine zu niedrige Spannung aufweisen würde. Insbesondere sind Lichtquellen einer einzelnen Zeile oder einer einzelnen Spalte der Vorrichtung zumindest abschnittsweise, bevorzugt abschnittsweise oder insgesamt in Reihe geschaltet. Dabei ist es möglich, dass eine einzelne Spalte und/oder eine einzelne Zeile, mithin insbesondere eine einzelne Beleuchtungseinrichtung, eine Mehrzahl von gruppenweise in Reihe geschalteten Lichtquellen aufweist oder als Anordnung miteinander in Reihe geschalteter Lichtquellen ausgebildet ist.

Die Vorrichtung ist vorzugsweise kompakt ausgebildet, insbesondere für eine Anordnung an einem Roboterarm, insbesondere an einer Roboterhand eines Roboterarms. Somit ist die Vorrichtung besonders flexibel und vielseitig, insbesondere in der Produktion, einsetzbar.

Zur Erfindung gehört auch eine Einrichtung zur optischen Erfassung von Oberflächen, insbesondere zur optischen Prüfung von Oberflächen und/oder zur Formerfassung von Gegenständen. Die Einrichtung weist eine Kamera, vorzugsweise mit einem Objektiv, auf. Außerdem weist die Einrichtung eine Vorrichtung zur vorzugsweise flächigen Beleuchtung von Gegenständen mit einer Abstrahlfläche und wenigstens zwei bevorzugt unabhängig voneinander ansteuerbaren Beleuchtungseinrichtungen auf, wobei die wenigstens zwei Beleuchtungseinrichtungen angeordnet und ausgebildet sind, um auf der wenigstens einen Abstrahlfläche wenigstens zwei verschiedene Beleuchtungsverteilungen zu erzeugen. Insbesondere weist die Einrichtung bevorzugt eine Vorrichtung nach einem der zuvor beschriebenen Ausführungsbeispiele auf. Dabei ist bevorzugt eine Steuereinrichtung zur Ansteuerung der Beleuchtungseinrichtung vorgesehen. Diese ist vorzugsweise mit einer Steuereinrichtung für die wenigstens eine Kamera wirkverbunden, oder die Steuereinrichtung übernimmt zusätzlich zu der Ansteuerung der Beleuchtungseinrichtung auch eine Ansteuerung der Kamera, insbesondere eine Vorgabe einer Belichtungszeit. Die Einrichtung weist weiterhin bevorzugt eine Recheneinrichtung auf, die eingerichtet ist, um Berechnungen an aufgenommenen Bildern vorzunehmen und aus den aufgenommenen Bildern durch Anwendung geeigneter Algorithmen errechnete Bilder zu erzeugen, insbesondere um auch feinste Fehler auf geprüften Bauteilen zu erfassen, wobei die Bauteile optisch anspruchsvolle Eigenschaften aufweisen können.

Die Steuereinrichtung ist eingerichtet, um die Beleuchtungseinrichtungen und die wenigstens eine Kamera miteinander zu synchronisieren. Erfindungsgemäß ist die Steuereinrichtung eingerichtet, um für die Beleuchtungseinrichtungen eine Maximal-Leuchtzeit vorzugeben, welche einer Belichtungszeit der Kamera entspricht. Weiterhin ist die Steuereinrichtung eingerichtet, um eine Helligkeit der Beleuchtungseinrichtungen durch Vorgabe von Leuchtzeiten für die Beleuchtungseinrichtungen zu variieren, insbesondere indem die Beleuchtungseinrichtungen durch die Steuereinrichtung mit Leuchtzeiten angesteuert werden, die kürzer oder gleich lang sind wie die Maximal-Leuchtzeit. Die Steuereinrichtung ist bevorzugt eingerichtet, um die Beleuchtungseinrichtungen separat und unabhängig voneinander insbesondere in Hinblick auf ihre Leuchtzeiten anzusteuern. Mittels der Steuereinrichtung sind die Beleuchtungseinrichtungen einerseits und die Kamera andererseits in Hinblick auf eine zeitliche Ansteuerung explizit miteinander koppelbar.

Es ist auch möglich, dass die Steuereinrichtung in die Kamera integriert ist. Insbesondere ist es möglich, dass ein zeitliches Schema für die verschiedenen Beleuchtungsverteilungen in oder an der Kamera eingestellt wird, wobei die Kamera dann wenigstens ein Signal zur Ansteuerung der Beleuchtungseinrichtungen ausgibt. Insofern ist es möglich, dass die Steuereinrichtung als Steuereinrichtung der Kamera ausgebildet ist, welche mit den Beleuchtungseinrichtungen zu ihrer Ansteuerung wirkverbunden ist, wobei die Steuereinrichtung zusätzlich zu der Ansteuerung der Kamera auch die Ansteuerung der Beleuchtungseinrichtungen übernimmt.

Es ist also möglich, dass die Steuereinrichtung in die Kamera und/oder in die Vorrichtung zur Beleuchtung integriert ist. Insbesondere ist es möglich, dass die Steuereinrichtung als im Anwendungsfeld programmierbare Gatter-Anordnung (field programmable gate array - FPGA) ausgebildet ist.

Es ist auch möglich, dass die Recheneinrichtung in die Kamera und/oder in die Vorrichtung zur Beleuchtung integriert ist. Insbesondere ist es möglich, dass die Recheneinrichtung als im Anwendungsfeld programmierbare Gatter-Anordnung (field programmable gate array - FPGA) ausgebildet ist. Es ist auch möglich, dass die Recheneinrichtung in die Steuereinrichtung integriert ist, oder dass die Steuereinrichtung die Funktionalität der Recheneinrichtung übernimmt. Es ist auch möglich, dass die Recheneinrichtung als externe Recheneinrichtung vorgesehen ist, beispielsweise als Personal Computer oder Server, oder in anderer geeigneter Weise.

Die Einrichtung zur optischen Erfassung von Oberflächen ist vorzugsweise kompakt ausgebildet, insbesondere für eine Anordnung an einem Roboterarm, besonders bevorzugt an einer Roboterhand eines Roboterarms. Auf diese Weise ist die Einrichtung insgesamt sehr flexibel und vielseitig einsetzbar, insbesondere in der Produktion.

Zur Erfindung gehört auch ein Verfahren zur optischen Prüfung von Oberflächen und/oder zur Formerfassung von Gegenständen, wobei eine Vorrichtung zur Beleuchtung nach einen der zur vorbeschriebenen Ausführungsbeispiele und/oder eine Einrichtung nach einem der zuvor beschriebenen Ausführungsbeispiele verwendet wird. Dabei werden insbesondere die verschiedenen Beleuchtungseinrichtungen angesteuert, um auf der wenigstens einen Abstrahlfläche wenigstens zwei verschiedene Beleuchtungsverteilungen zu erzeugen. In Zusammenhang mit dem Verfahren ergeben sich die Vorteile, die bereits in Zusammenhang mit der Vorrichtung und der Einrichtung erläutert wurden.

Besonders bevorzugt wird eine Ausführungsform des Verfahrens, bei welcher die Beleuchtungseinrichtungen zeilen- und/oder spaltenweise unabhängig voneinander, besonders bevorzugt nur in Form ganzer Zeilen und/oder nur in Form ganzer Spalten, angesteuert werden.

Die Beschreibung der Vorrichtung sowie der Einrichtung einerseits und des Verfahrens andererseits sind komplementär zueinander zu verstehen. Insbesondere sind Merkmale der Vorrichtung oder der Einrichtung, die explizit oder implizit in Zusammenhang mit dem Verfahren erläutert wurden, bevorzugt einzeln oder miteinander kombiniert Merkmale eines bevorzugten Ausführungsbeispiels der Vorrichtung oder der Einrichtung. Verfahrensschritte, die explizit oder implizit in Zusammenhang mit der Vorrichtung oder der Einrichtung erläutert wurden, sind bevorzugt einzeln oder miteinander kombiniert Schritte einer bevorzugten Ausführungsform des Verfahrens. Dieses zeichnet sich bevorzugt durch wenigstens einen Verfahrensschritt aus, welcher durch wenigstens ein Merkmal eines erfindungsgemäßen oder bevorzugten Ausführungsbeispiels der Vorrichtung oder der Einrichtung bedingt ist. Die Vorrichtung und/oder die Einrichtung zeichnet/zeichnen sich bevorzugt durch wenigstens ein Merkmal aus, welches durch wenigstens einen Verfahrensschritt einer erfindungsgemäßen oder bevorzugten Ausführungsform des Verfahrens bedingt ist.

Die Erfindung wird im Folgenden anhand der Zeichnung näher erläutert. Dabei zeigen:
- Figur 1: eine schematische Darstellung eines ersten Ausführungsbeispiels einer Vorrichtung zur flächigen Beleuchtung in Draufsicht und in Seitenansicht, und
- Figur 2: eine schematische Darstellung eines zweiten Ausführungsbeispiels der Vorrichtung in Draufsicht.

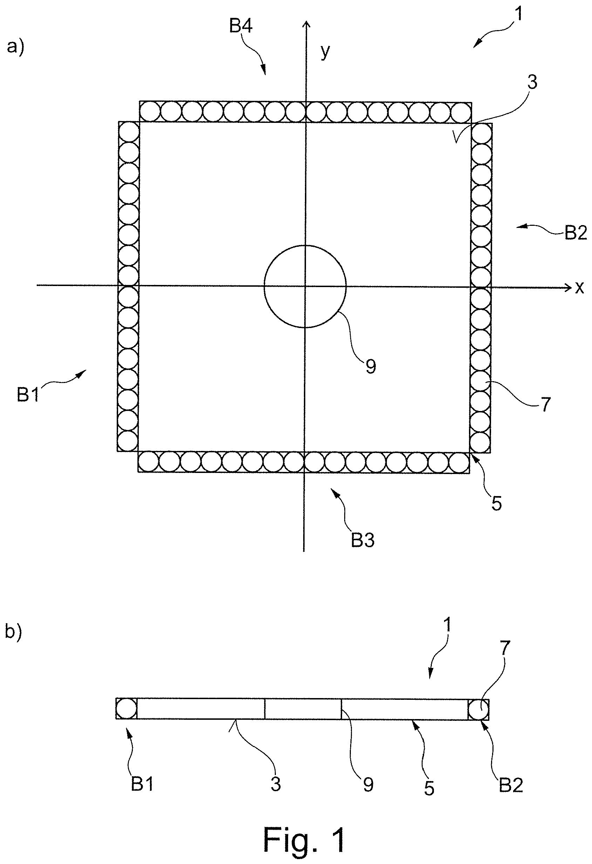

Fig. 1 zeigt eine schematische Darstellung eines ersten Ausführungsbeispiels einer Vorrichtung 1 zur flächigen Beleuchtung von Gegenständen, wobei Figur 1a) eine Draufsicht auf eine Abstrahlfläche 3 und Figur 1b) eine Seitenansicht der Vorrichtung 1 darstellt.

Die Vorrichtung 1 weist eine Abstrahlfläche 3 sowie wenigstens zwei, hier vier unabhängig voneinander ansteuerbare Beleuchtungseinrichtungen B1, B2, B3, B4 auf. Dabei erstreckt sich eine erste Beleuchtungseinrichtung B1 parallel zu einer zweiten Beleuchtungseinrichtung B2 und schräg, hier insbesondere senkrecht, zu einer dritten Beleuchtungseinrichtung B3 und zu einer parallel zu dieser angeordnet, vierten Beleuchtungseinrichtung B4.

Es wird erfindungsgemäß mindestens eine flächige Beleuchtung verwendet, welche dazu geeignet ist, mehrere strukturierte Beleuchtungsmuster darzustellen sowie eine Einrichtung zur Ansteuerung der Beleuchtung. Optional kann eine Kamera mit einem Kameraobjektiv umfasst sein. Optional kann die Kamera eine Recheneinheit, insbesondere in Form eines FPGA, umfassen, welche in der Lage ist, Berechnungen auf den aufgenommenen Bildern vorzunehmen und aus den aufgenommenen Bildern durch Anwendung von geeigneten Algorithmen errechnete Bilder zu erzeugen.

Das zu prüfenden Bauteil wird durch die flächig strukturierte Beleuchtung aus mehreren Raumrichtungen beleuchtet und von einer Kamera aufgenommen, die von einer Einrichtung umfasst oder mit der Einrichtung verbunden ist. Die dabei entstehenden Helligkeitsschattierungen in den aufgenommenen Bildern enthalten Information über die topografische Beschaffenheit der Bauteiloberfläche.

Ziel ist es, mit dieser flächigen Beleuchtung mehrere Beleuchtungsverteilungen darzustellen. Insbesondere können Beleuchtungsverteilungen dargestellt werden, deren Leuchtdichte entlang einer Koordinatenachse zumindest abschnittsweise stetig zu- oder abnimmt, besonders bevorzugt näherungsweise linear zu- oder abnimmt. Beispielsweise kann eine durch die erste Beleuchtungseinrichtung B1 erzeugte Leuchtdichte zumindest näherungsweise linear mit der Ortskoordinate x abnehmen, während sie bei einer Aktivierung der zweiten Beleuchtungseinrichtung B2 zumindest näherungsweise mit der Ortskoordinate x zunimmt. Hiermit ist es möglich, die lokale Neigung der Bauteiloberfläche in Richtung der x-Koordinate zu erfassen. Bei Aktivierung der dritten Beleuchtungseinrichtung B3 kann die Leuchtdichte zumindest näherungsweise mit der Ortskoordinate y abnehmen, während sie bei Aktivierung der vierten Beleuchtungseinrichtung B4 linear mit der y-Koordinate zunimmt. Alternativ oder zusätzlich können die Beleuchtungsverteilungen auch entlang von anderen Richtungen variieren, beispielsweise entlang der beiden Diagonalen bezüglich der x- und y-Achse. Alternativ kann auch eine andere Verteilung gewählt werden als eine lineare Verteilung, beispielsweise eine Verteilung, die zumindest abschnittsweise stetig zu- oder abnimmt. Alternativ oder zusätzlich können auch Cosinus- oder Sinus-förmige Verteilungen oder diesen angenäherte Verteilungen verwendet werden, insbesondere solche, bei denen zur Cosinus- oder Sinusfunktion ein Offset derart addiert wird, dass nur positive Funktionswerte vorkommen.

Eine flächige Beleuchtung, welche Beleuchtungsverteilungen darstellen kann, deren Leuchtdichte zumindest abschnittsweise stetig zu- oder abnimmt, kann also insbesondere wie folgt aufgebaut sein. An den Kanten einer vorzugsweisen rechteckigen transparenten, vorzugsweise diffus streuenden Platte 5 sind Lichtquellen 7 befestigt, vorzugsweise LEDs, die einzeln, vorzugsweise aber in Gruppen unabhängig voneinander schaltbar sind. Von den Lichtquellen 7 ist hier der besseren Übersichtlichkeit wegen nur eine mit dem Bezugszeichen 7 gekennzeichnet. Besonders bevorzugt wird eine Anordnung, bei der an jeder der vier Kanten einer rechteckförmigen Platte 5 jeweils eine Gruppe von LEDs befestigt ist, die eine Beleuchtungseinrichtung bildet, und die unabhängig von den anderen Gruppen schaltbar ist. Figur 1 zeigt eine solche Anordnung. Wird die erste Beleuchtungseinrichtung B1 aktiviert, so entsteht eine Beleuchtungsverteilung, deren Leuchtdichte entlang der x-Achse zumindest abschnittsweise stetig abnimmt. Wird die zweite Beleuchtungseinrichtung B2 aktiviert, so entsteht eine Beleuchtungsverteilung, deren Leuchtdichte zumindest abschnittsweise entlang der x-Achse stetig zunimmt. Bei Aktivierung der dritten Beleuchtungseinrichtung B3 nimmt die Leuchtdichte entlang der y-Achse zumindest abschnittsweise stetig ab, während sie bei Aktivierung der vierten Beleuchtungseinrichtung B4 zumindest abschnittsweise stetig zunimmt.

Alternativ kann es sich bei der transparenten Platte 5 statt einer diffus streuenden Platte auch um eine klartransparente Platte handeln, bei der vorzugsweise an der Abstrahlfläche 3 oder an einer dieser gegenüberliegenden Grenzfläche eine diffuse Streuung erzeugt wird, beispielsweise durch Aufrauen der Abstrahlfläche 3 oder durch Aufbringen einer diffus streuenden Folie. Vorzugsweise kann die Platte mit einem Sichtbereich 9, vorzugsweise einem mittigen Sichtbereich 9 versehen sein, insbesondere mit einer Bohrung, die eine Sichtöffnung für eine Kamera mit Objektiv bildet. Vorteilhaft bei einer Anordnung mit einer transparenten Platte ist der einfache Aufbau. Es können aber aufgrund der Sichtöffnung abgeschattete Bereiche entstehen, die den ansonsten gleichmäßigen Verlauf der Leuchtdichte unterbrechen. Auch ist die erzielbare Leuchtdichte mit solch einer Anordnung begrenzt, da das Licht der Beleuchtungen lediglich an den Rändern der Platte 5 eingekoppelt wird. Die Form der Platte 5 kann eben gewählt sein. Alternativ kann die Platte 5 aber auch zylinderförmig gebogen sein oder auch Teile eines Zylinders darstellen. Alternativ ist auch die Form eines Kegels oder Kegelabschnitts oder Teilen hiervon möglich. Andere Formen sind ebenso möglich bis hin zur Form einer Kugel oder Teilen hiervon oder auch Freiformflächen.

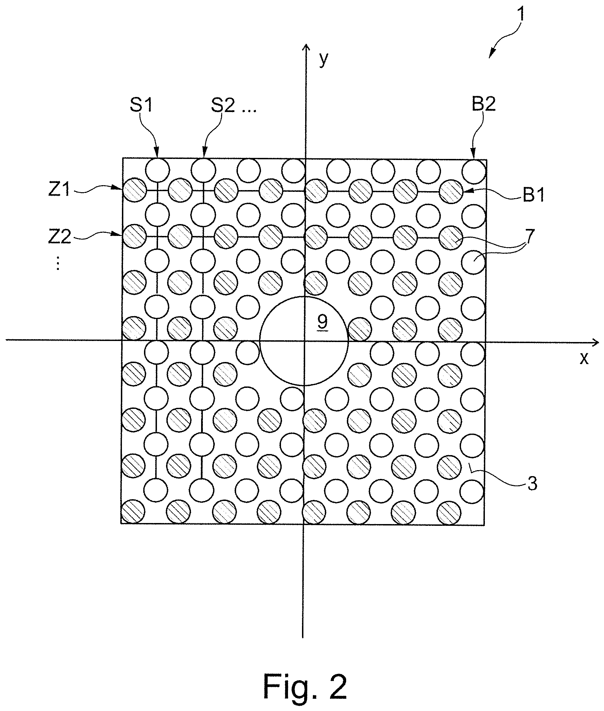

Figur 2 zeigt alternativ dazu daher eine Anordnung, bei der die Lichtquellen 7, insbesondere LED-Lichtquellen, flächig verteilt auf einer Elektronikplatine angeordnet werden. Gleiche und funktionsgleiche Elemente sind mit gleichen Bezugszeichen versehen, so dass insofern auf die vorangegangene Beschreibung verwiesen wird. Hier ist insbesondere eine Anordnung in Form einer rechteckförmigen Matrix möglich. Besonders bevorzugt sind die LEDs entlang der Zeilen bzw. Spalten einer Matrix angeordnet. Bevorzugt wird eine Anordnungen der Leiterbahnen der Platine, die es ermöglicht, jeweils eine Zeile bzw. Spalte von LEDs der Beleuchtungsmatrix als Beleuchtungseinrichtung unabhängig von den anderen Zeilen bzw. Spalten in ihrer Helligkeit zu steuern. Vorzugsweise werden hierzu zumindest Abschnitte von Zeilen bzw. Spalten von LEDs in Reihe geschaltet. Die Helligkeit der LEDs einer Zeile bzw. Spalte kann durch separate Bestromung jeder Zeile bzw. Spalte erfolgen. Dabei variiert die Stromstärke von Zeile zu Zeile bzw. von Spalte zu Spalte. Erfindungsgemäß vorteilhafter geschieht die Helligkeitsregulierung der Zeilen bzw. Spalten aber dadurch, dass zwar die Stromstärke konstant bleibt, dafür aber die Dauer der Bestromung für jede Zeile bzw. Spalte unabhängig geregelt wird. Dies kann vorzugsweise durch einen für jede Zeile bzw. Spalte vorgesehenen Transistor erfolgen. Vorzugsweise wird die jeweilige Bestromungsdauer für jede Zeile bzw. Spalte durch eine weitere elektronische Schaltung vorgegeben, welche die Beleuchtungssteuerung übernimmt. Vorteilhaft ist diese Steuerung ebenfalls in die Vorrichtung integriert, beispielsweise auf derselben Platine, welche die Lichtquellen trägt oder alternativ auf einer zweiten Platine, welche mit der eigentlichen Beleuchtungsplatine elektrisch verbunden ist. Vorteilhaft ist diese zweite Platine in einer Ebene parallel zur Beleuchtungsplatine angeordnet, wodurch die Baugröße der Anordnung minimiert werden kann. Eine bevorzugte Bauform der Beleuchtungsplatine besitzt einen rechteckigen, insbesondere einen quadratischen Umriss. Besonders bevorzugt wird eine Bauform mit kreisförmigem Umriss der Beleuchtungsplatine. Vorzugsweise ist im Bereich der Beleuchtungsplatine sowie gegebenenfalls im Bereich der parallel dazu angeordneten Steuerungsplatine ein Sichtbereich 9 vorgesehen, welcher den Blick für eine Kamera auf ein zu prüfendes Bauteil freigibt. Vorzugsweise ist dieser Sichtbereich 9 im Zentrum der rechteckig, quadratisch, kreisförmig oder anders berandeten Beleuchtungsplatine angeordnet.

Vorzugsweise handelt es sich bei der Beleuchtungsplatine um eine ebene Platine. Alternativ wird eine flexible Beleuchtungsplatine bevorzugt, welche auch nicht ebene Formen annehmen kann. Beispielsweise ist es damit möglich, Lichtquellen 7 auf einer zylinderförmig gebogenen Beleuchtungsplatine zu positionieren, so dass Licht in den Innenraum des Zylinders gestrahlt wird. Dadurch entsteht ein Lichttunnel. Anstelle eines Vollzylinders kann alternativ auch die Form eines Teils eines Zylinders gewählt werden, beispielsweise mit einem Umfangswinkel der kleiner als 360° ist. Alternativ können die Lichtquellen 7 auch auf der Außenseite einer zylinderförmig gebogenen Platine angebracht werden. Eine solche Anordnung ist vorteilhaft zur Innenprüfung von Bohrungen und Hohlräumen. Auch hier ist es möglich, Teile eines Zylinders zu realisieren. Alternativ ist es möglich andere Formen zu realisieren, beispielsweise kann mit Hilfe einer flexiblen Beleuchtungsplatine auch die Form eines Kegels oder eines Kegelabschnitts oder Teilen hiervon realisiert werden. Vorzugsweise werden die Lichtquellen 7 dann an der Innenseite des Kegels platziert. Hiermit ist die Beleuchtung eines zu prüfenden Gegenstandes unter einem möglichst großen Raumwinkel möglich. Alternativ können die Lichtquellen 7 aber auch an der Außenseite platziert werden. Dies ist vorteilhaft für die Prüfung von Innenräumen.

Mit Hilfe von flexiblen Beleuchtungsplatinen sind viele weitere Formen möglich, bis hin zu Freiformflächen. Ebenso ist es möglich, mehrere flexible oder auch nicht flexible Platinen oder auch beides zu kombinieren. Dies ist insbesondere von Vorteil, wenn für die gewünschte Form keine ebene Abwicklung möglich ist wie dies beispielsweise bei einer Kugelfläche oder Teilen hiervon der Fall ist.

Die Beleuchtungssteuerung wird vorzugsweise von der in die Vorrichtung 1 integrierten Beleuchtungssteuerung oder Steuereinrichtung vorgenommen. Vorzugsweise enthält diese zumindest einen digital arbeitenden Schaltungsteil. Besonders bevorzugt wird hierfür eine Schaltung, welche ein FPGA enthält. Vorzugsweise ist dieser Steuerungsteil in der Lage, die gewünschten Beleuchtungsverteilungen in Form von digitalen Daten bereitzuhalten. Diese Daten werden bevorzugt über eine Schnittstelle von außen, beispielsweise von einer die Bilddaten der Kamera verarbeitenden Recheneinheit an die Vorrichtung übertragen. Durch die Wahl der Daten ist es möglich, auf einfache Weise beispielsweise einen zumindest abschnittsweise stetig zunehmenden oder abnehmenden Verlauf der Leuchtdichte entlang einer Koordinatenachse, insbesondere einen linearen oder auch einen Cosinus- oder Sinus-förmigen Verlauf oder einen diesen Formen angenäherten Verlauf vorzugeben. Darüber hinaus sind beliebige andere Beleuchtungsverteilungen möglich und auf einfache Weise vorgebbar. Der Wechsel einer Beleuchtungsverteilung zur nächsten Beleuchtungsverteilung wird bevorzugt ebenfalls von der Beleuchtungssteuerung übernommen. Insbesondere kann dieser Wechsel über eine Schnittstelle der Vorrichtung 1 gesteuert werden, insbesondere eine Schnittstelle zu einer Kamera, welche synchron zur Bildaufnahme anhand eines Triggersignals die Aktivierung der Beleuchtungsverteilungen bewirkt.

Alternativ dazu ist es auch möglich die Lichtquellen, insbesondere die LEDs, so zu verschalten, dass jede Lichtquelle, insbesondere jede LED, unabhängig von den anderen Lichtquellen, insbesondere LEDs, angesteuert werden kann. Die Ansteuerung erfolgt ebenfalls durch eine geeignete Beleuchtungssteuerung.

Insgesamt zeigt Figur 2 ein Ausführungsbeispiel der Vorrichtung 1, bei welcher eine Mehrzahl von Beleuchtungseinrichtungen B1, B2 in Form von Zeilen und Spalten, beispielsweise - schematisch mit Linien verbunden angedeutete - Zeilen Z1, Z2,..., und Spalten S1, S2,..., auf der Abstrahlfläche angeordnet sind, wobei hier beispielsweise eine erste Beleuchtungseinrichtung B1 als Zeile und eine zweite Beleuchtungseinrichtung B2 als Spalte auf der Abstrahlfläche 3 angeordnet sind. Die Beleuchtungseinrichtungen B1, B2 sind spalten-und/oder zeilenweise unabhängig voneinander ansteuerbar, bevorzugt nur als ganze Zeilen und/oder Spalten.

Jede der Beleuchtungseinrichtungen B1, B2 weist eine Mehrzahl entlang der Erstreckungsrichtung der jeweiligen Beleuchtungseinrichtung B1, B2 angeordnete Lichtquellen 7 auf, die bevorzugt als LED ausgebildet sind.

Die Vorrichtung 1 weist hier insbesondere zwei Gruppen von Beleuchtungseinrichtungen auf, nämlich eine erste Gruppe von Beleuchtungseinrichtungen, die eine Mehrzahl erster Beleuchtungseinrichtungen B1 als Zeilen aufweist, und eine zweite Gruppe von Beleuchtungseinrichtungen, die eine Mehrzahl von zweiten Beleuchtungseinrichtungen B2 als Spalten auf der Abstrahlfläche 3 aufweist, wobei die Gruppen von Beleuchtungseinrichtungen als Zeilen und Spalten ansteuerbar sind. Der einfachen Darstellung wegen sind hier jeweils nur eine erste Beleuchtungseinrichtung B1 und nur eine zweite Beleuchtungseinrichtung B2 mit Bezugszeichen versehen. Wichtig ist, dass Zeilen einerseits und Spalten andererseits jeweils durch separate Beleuchtungseinrichtungen B1, B2 dargestellt werden, wobei jede Lichtquelle 7 genau einer Beleuchtungseinrichtung B1, B2 - entweder einer Zeile oder einer Spalte, nicht jedoch sowohl einer Zeile als auch einer Spalte -, zugeordnet ist.

Unmittelbar benachbarte Lichtquellen 7 weisen - innerhalb einer Beleuchtungseinrichtung B1, B2 - bevorzugt einen Abstand - insbesondere von Zentrum zu Zentrum oder von Mittelpunkt zu Mittelpunkt - von wenigstens 0,5 mm bis höchstens 200 mm, vorzugsweise von wenigstens 1 mm bis höchstens 100 mm, vorzugsweise von wenigstens 2 mm bis höchstens 50 mm, vorzugsweise von wenigstens 5 mm bis höchstens 20 mm, vorzugweise von 10 mm, auf. Der Abstand, insbesondere der Mittenabstand, beträgt bevorzugt von wenigstens 1 mm bis höchstens 200 mm, vorzugsweise von wenigstens 2 mm bis höchstens 200 mm, vorzugsweise von wenigstens 5 mm bis höchstens 200 mm, vorzugsweise von wenigstens 10 mm bis höchstens 200 mm. Der Abstand, insbesondere der Mittenabstand, beträgt bevorzugt von wenigstens 1 mm bis höchstens 50 mm, vorzugsweise von wenigstens 1 mm bis höchstens 20 mm, vorzugsweise von wenigstens 1 mm bis höchstens 10 mm.

Eine nicht dargestellte Steuereinrichtung zur Ansteuerung der Beleuchtungseinrichtungen B1, B2 ist vorzugsweise eingerichtet zum Wechsel verschiedener Beleuchtungsverteilungen mit einer Frequenz von wenigstens 150 Hz bis höchstens 2 MHz, vorzugsweise von wenigstens 500 Hz bis höchstens 1 MHz, vorzugsweise von wenigstens 2 kHz bis höchstens 200 kHz, vorzugsweise von wenigstens 10 kHz bis höchstens 50 kHz, vorzugsweise von 25 kHz. Die Steuereinrichtung ist bevorzugt eingerichtet zum Wechsel zwischen verschiedenen Beleuchtungsverteilungen mit einer Frequenz von mindestens 500 Hz bis höchstens 2 MHz, vorzugsweise von mindestens 2 kHz bis höchstens 2 MHz, vorzugsweise von mindestens 10 kHz bis höchstens 2 MHz, vorzugsweise von mindestens 25 kHz bis höchstens 2 MHz. Vorzugsweise ist die Vorrichtung eingerichtet zum Wechsel zwischen verschiedenen Beleuchtungsverteilungen mit einer Frequenz von mindestens 150 Hz bis höchstens 1 MHz, vorzugsweise von mindestens 150 Hz bis höchstens 200 kHz, vorzugsweise von mindestens 150 kHz bis höchstens 50 kHz, vorzugsweise von mindestens 150 Hz bis höchstens 25 kHz.

Weiterhin ist die Steuereinrichtung bevorzugt eingerichtet zur Steuerung der Helligkeit der Beleuchtungseinrichtungen durch Vorgabe einer Leuchtzeit für die einzelnen Beleuchtungseinrichtungen B1, B2.

Vor der Abstrahlfläche 3 ist bevorzugt - insbesondere von der Abstrahlfäche 3 beabstandet - ein Streuelement vorgesehen.

Insgesamt zeigt sich, dass mittels der Vorrichtung in kompakter, einfacher, schneller und sehr effizienter Weise eine flächige Beleuchtung von Gegenständen aus verschiedenen Richtungen bereitgestellt werden kann, wobei es möglich ist, mithilfe einer solchen Beleuchtung selbst feinste Fehler auf Bauteilen mit anspruchsvollen optischen Eigenschaften kostengünstig zu erfassen. Aufgrund der einfachen und optional hochfrequenten Ansteuerung der Vorrichtung 1 ist insbesondere eine optische Prüfung von Bauteilen schritthaltend zu einem Produktionstakt möglich.

## Patentansprüche

1. Vorrichtung (1) zur Beleuchtung von Gegenständen, mit
- einer Abstrahlfläche (3),
- wenigstens zwei Beleuchtungseinrichtungen (B1,B2,B3,B4), wobei
- die wenigstens zwei Beleuchtungseinrichtungen (B1,B2,B3,B4) angeordnet und ausgebildet sind, um auf der Abstrahlfläche (3) wenigstens zwei verschiedene Beleuchtungsverteilungen zu erzeugen, mit
- einer Kamera, die eine vorbestimmte Belichtungszeit aufweist, und mit
- einer Steuereinrichtung, wobei
- die Steuereinrichtung zur Ansteuerung der Beleuchtungseinrichtungen (B1, B2, B3, B4) eingerichtet ist, **dadurch gekennzeichnet, dass**
- die Steuereinrichtung eingerichtet ist zur Variation der Helligkeit der Beleuchtungseinrichtungen (B 1,B2,B3,B4) durch Vorgabe von Leuchtzeiten, wobei die Steuereinrichtung eingerichtet ist zur Bestimmung einer Maximal-Leuchtzeit für die Beleuchtungseinrichtungen (B1,B2,B3,B4), welche der vorbestimmten Belichtungszeit der Kamera entspricht, wobei die Steuereinrichtung ausgebildet ist zur individuellen Einstellung der Helligkeit der Beleuchtungseinrichtungen (B1,B2,B3,B4) durch Ansteuern der Beleuchtungseinrichtungen (B1,B2,B3,B4) mit Leuchtzeiten, wobei die Helligkeit einzelner Beleuchtungseinrichtungen von 0% bis 100% variiert werden kann, indem die Leuchtzeiten für die einzelnen Beleuchtungseinrichtungen (B1,B2,B3,B4) individuell zwischen 0% und 100% der Maximal-Leuchtzeit gewählt werden, und wobei die Steuereinrichtung eingerichtet ist, um die Leuchtzeiten der Beleuchtungseinrichtungen (B 1,B2,B3,B4) mit Belichtungszeiten der Kamera zu synchronisieren.

2. Vorrichtung (1) nach Anspruch 1, **dadurch gekennzeichnet, dass**
- eine erste Beleuchtungseinrichtung (B1) der wenigstens zwei Beleuchtungsreinrichtungen (B1,B2,B3,B4) sich entlang einer ersten Richtung erstreckt, wobei
- eine zweite Beleuchtungseinrichtung (B2) der wenigstens zwei Beleuchtungseinrichtungen (B 1,B2,B3,B4) sich entlang einer zweiten Richtung erstreckt, und wobei
- die erste Richtung und die zweite Richtung bevorzugt schräg zueinander orientiert sind.

3. Vorrichtung (1) nach Anspruch 1, **dadurch gekennzeichnet, dass**
a) eine Mehrzahl von Beleuchtungseinrichtungen (B1,B2,B3,B4) in Form von Zeilen und/oder Spalten auf der Abstrahlfläche (3) angeordnet ist, wobei die Beleuchtungseinrichtungen (B 1,B2,B3,B4) spalten- und/oder zeilenweise unabhängig voneinander ansteuerbar sind, und/oder dass
b) die Vorrichtung (1) so ausgebildet ist, dass die Beleuchtungseinrichtungen (B1,B2,B3,B4) nur als ganze Zeile und/oder als ganze Spalten ansteuerbar sind, und/oder dass
c) die Beleuchtungseinrichtungen (B1,B2,B3,B4) in Form konzentrischer Ringe auf der bevorzugt ebenen Abstrahlfläche (3) angeordnet sind, und/oder dass
d) die wenigstens zwei Beleuchtungseinrichtungen (B1,B2,B3,B4) in runder Anordnung auf der bevorzugt ebenen Abstrahlfläche (3) angeordnet sind, wobei sie verschiedene Sektoren bilden, und/oder dass
e) eine erste Beleuchtungseinrichtung der wenigstens zwei Beleuchtungseinrichtungen (B1,B2,B3,B4) sich entlang einer ersten Winkelkoordinate erstreckt, wobei sich eine zweite Beleuchtungseinrichtung der wenigstens zwei Beleuchtungseinrichtungen (B1,B2,B3,B4) entlang einer Längenkoordinate oder entlang einer zweiten, von der ersten Winkelkoordinate verschiedene Winkelkoordinate erstreckt, und/oder dass
f) eine Mehrzahl von Beleuchtungseinrichtungen (B1,B2,B3,B4), die jeweils genau eine und nur eine Strahlungsquelle aufweisen, matrixartig auf der Abstrahlfläche angeordnet ist.

4. Vorrichtung (1) nach Anspruch 1, **dadurch gekennzeichnet, dass**
a) wenigstens eine Beleuchtungseinrichtung (B1,B2,B3,B4) eine Mehrzahl entlang der Erstreckung der Beleuchtungseinrichtung (B1,B2,B3,B4) nebeneinander angeordneter Lichtquellen (7) aufweist, und/oder dass
b) wenigstens eine Beleuchtungseinrichtung (B1,B2,B3,B4) genau eine Strahlungsquelle, die wenigstens eine Lichtquelle (7) aufweist, aufweist,
wobei die Lichtquellen (7) vorzugsweise als LED ausgebildet sind.

5. Vorrichtung (1) nach dem Anspruch 4, **dadurch gekennzeichnet, dass** unmittelbar benachbarte Strahlungs- oder Lichtquellen (7) und/oder unmittelbar benachbarte Beleuchtungseinrichtungen (B1,B2,B3,B4) einen Abstand, insbesondere einen Mittenabstand, zueinander von wenigstens 0,5 mm bis höchstens 200 mm, vorzugsweise von wenigstens 1 mm bis höchstens 100 mm, vorzugsweise von wenigstens 2 mm bis höchstens 50 mm, vorzugsweise von wenigstens 5 mm bis höchstens 20 mm, vorzugsweise von 10 mm, aufweisen.

6. Vorrichtung (1) nach Anspruch 1, **dadurch gekennzeichnet, dass** wenigstens zwei Gruppen von Beleuchtungseinrichtungen (B 1,B2,B3,B4) vorgesehen sind, wobei eine erste Gruppe von Beleuchtungseinrichtungen (B1) als Spalten und eine zweite Gruppe von Beleuchtungseinrichtungen (B2) als Zeilen auf der Abstrahlfläche (3) angeordnet und ansteuerbar sind.

7. Vorrichtung (1) nach einem der vorhergehenden Ansprüche, **dadurch gekennzeichnet, dass** die Steuereinrichtung eingerichtet ist zum Wechsel verschiedener Beleuchtungsverteilung mit einer Frequenz von wenigstens 150 Hz bis höchstens 2 MHz, vorzugsweise von wenigstens 500 Hz bis höchstens 1 MHz, vorzugsweise von wenigstens 2 kHz bis höchstens 200 kHz, vorzugsweise von wenigstens 10 kHz bis höchstens 50 kHz, vorzugsweise von 25 kHz.

8. Vorrichtung (1) nach einem der vorhergehenden Ansprüche, **dadurch gekennzeichnet, dass** ein Streuelement vor der Abstrahlfläche (3) angeordnet ist, vorzugsweise in einem Abstand von der Abstrahlfläche von wenigstens 0,5 mm bis höchstens 200 mm, vorzugsweise von wenigstens 1 mm bis höchstens 100 mm, vorzugsweise von wenigstens 2 mm bis höchstens 50 mm, vorzugsweise von wenigstens 5 mm bis höchstens 20 mm, vorzugsweise von 10 mm.

9. Vorrichtung (1) nach Anspruch 1 oder Anspruch 2, **dadurch gekennzeichnet, dass** die Abstrahlfläche (3) an einer transparenten Platte (5) ausgebildet ist, wobei an wenigstens zwei Rändern der transparenten Platte (5) je eine Beleuchtungseinrichtung (B1,B2,B3,B4) derart angeordnet ist, dass von der Beleuchtungseinrichtung (B1,B2,B3,B4) emittierte Strahlung in die transparente Platte (5) eingekoppelt wird.

10. Vorrichtung (1) nach Anspruch 9, **dadurch gekennzeichnet, dass** die transparente Platte (5) eine Auskoppelstruktur aufweist.

11. Vorrichtung (1) nach einem der vorhergehenden Ansprüche, **dadurch gekennzeichnet, dass** die Abstrahlfläche (3) einen Sichtbereich (9) aufweist.

12. Vorrichtung (1) nach einem der vorhergehenden Ansprüche, **dadurch gekennzeichnet, dass** die Abstrahlfläche (3) eben, gebogen oder gekrümmt, insbesondere zylinderförmig, zylinderabschnittsförmig, kegelförmig, kegelabschnittsförmig, kugelförmig, kugelabschnittsförmig, in Form eine Freiformfläche, eckig, kreisförmig oder oval ausgebildet ist.

13. Vorrichtung (1) nach einem der Ansprüche 4 oder 5, **dadurch gekennzeichnet, dass** die Lichtquellen (7) einer der Beleuchtungseinrichtungen (B1,B2,B3,B4) zumindest abschnittsweise in Reihe geschaltet sind.

## Claims

1. Apparatus (1) for illuminating objects, having
- an emitting surface (3),
- at least two illumination devices (B 1,B2,B3,B4), wherein
- the at least two illumination devices (B 1,B2,B3,B4) are arranged and configured to generate at least two different illumination distributions on the emitting surface (3), having
- a camera with a predetermined exposure time, and having
- a control device, wherein
- the control device is set up to control the illumination devices (B1,B2,B3,B4),
- **characterised in that**
- the control device is set up to vary the luminosity of the illumination devices (B1,B2,B3,B4) by specifying illumination times, wherein the control device is set up to determine a maximum illumination time for the illumination devices (B1,B2,B3,B4), which corresponds to the predetermined exposure time of the camera, wherein the control device is configured to individually adjust the luminosity of the illumination devices (B1,B2,B3,B4) by controlling the illumination devices (B1,B2,B3,B4) with illumination times, wherein the luminosity of single illumination devices (B1,B2,B3,B4) can be varied from 0% to 100% by individually selecting the illumination times for the single illumination devices (B1,B2,B3,B4) between 0% and 100% of the maximum illumination time, and wherein the control device is set up to synchronise the illumination times of the illumination devices (B1,B2,B3,B4) with exposure times of the camera.

2. Apparatus (1) according to claim 1, **characterised in that**
- a first illumination device (B1) of the at least two illumination devices (B 1,B2,B3,B4) extending along a first direction, wherein
- a second illumination device (B2) of the at least two illumination devices (B1,B2,B3,B4)
- extending along a second direction, and wherein
- the first direction and the second direction are preferably oriented at an angle to each other.

3. Apparatus (1) according to claim 1, **characterised in that**
a) a plurality of illumination devices (B 1,B2,B3,B4) is arranged in the form of rows and/or columns on the emitting surface (3), wherein the illumination devices (B1,B2,B3,B4) are independently controllable of each other column by column and/or row by row, and/or **in that**
b) the apparatus (1) is configured such that the illumination devices (B1,B2,B3,B4) are only controllable as whole rows and/or whole columns, and/or **in that**
c) the illumination devices (B1,B2,B3,B4) are arranged in the form of concentric rings on the preferably flat emitting surface (3), and/or **in that**
d) the at least two illumination devices (B1,B2,B3,B4) are arranged in a circular arrangement on the preferably flat emitting surface (3), wherein they form different sectors, and/or **in that**
e) a first illumination device of the at least two illumination devices (B 1,B2,B3,B4) extends along a first angular coordinate, wherein a second illumination device of the at least two illumination devices (B 1,B2,B3,B4) extends along a radial coordinate or along a second angular coordinate which is different from the first angular coordinate, and/or **in that**
f) a plurality of illumination devices (B 1,B2,B3,B4), each having exactly one and only one radiating source, is arranged in the form of a matrix on the emitting surface.

4. Apparatus (1) according to claim 1, **characterised in that**
a) at least one illumination device (B 1,B2,B3,B4) has a plurality of light sources (7) arranged next to each other along the extension of the illumination device (B1,B2,B3,B4), and/or **in that**
b) at least one illumination device (B1,B2,B3,B4) has exactly one radiating source which has the at least one light source (7),
wherein the light sources (7) are preferably configured as LEDs.

5. Apparatus (1) according to claim 4, **characterised in that** immediately adjacent radiating or light sources (7) and/or immediately adjacent illumination devices (B1,B2,B3,B4) have a distance - particularly a center-to-center distance - relative to each other of at least 0,5 mm to at most 200 mm, preferably of at least 1 mm to at most 100 mm, preferably of at least 2 mm to at most 50 mm, preferably of at least 5 mm to at most 20 mm, preferably of 10 mm.

6. Apparatus (1) according to claim 1, **characterised in that** at least two groups of illumination devices (B1,B2,B3,B4) are provided, wherein a first group of illumination devices (B1) being arranged and controllable as columns and a second group of illumination devices (B2) being arranged and controllable as rows on the emitting surface (3).

7. Apparatus (1) according to one of the preceding claims, **characterised in that** control device is adapted to change various illumination distributions at a frequency of at least 150 Hz to at most 2 MHz, preferably of at least 500 Hz to at most 1 MHz, preferably of at least 2 kHz to at most 200 kHz, preferably of at least 10 kHz to at most 50 kHz, preferably of 25 kHz.

8. Apparatus (1) according to one of the preceding claims, **characterised in that** a scattering element is arranged in front of the emitting surface (3), preferably at a distance from the emitting surface of at least 0,5 mm to at most 200 mm, preferably of at least 1 mm to at most 100 mm, preferably of at least 2 mm to at most 50 mm, preferably of at least 5 mm to at most 20 mm, preferably of 10 mm.

9. Apparatus (1) according to claim 1 or claim 2, **characterised in that** the emitting surface (3) is formed on a transparent plate (5), wherein an illumination device (B1,B2,B3,B4) is arranged at each of at least two edges of the transparent plate (5) in such a way that radiation emitted by the illumination device (B1,B2,B3,B4) is coupled into the transparent plate (5).

10. Apparatus (1) according to claim 9, **characterised in that** the transparent plate (5) has an output coupling structure.

11. Apparatus (1) according to one of the preceding claims, **characterised in that** the emitting surface (3) has a viewing area (9).

12. Apparatus (1) according to one of the preceding claims, **characterised in that** the emitting surface (3) is flat, bent or curved, and particularly is cylindrical, cylindrical-segment- shaped, cone-shaped, cone-segment-shaped, spherical, spherical-segment-shaped, in the form of a free-form surface, rectangular, circular or oval.

13. Apparatus (1) according to claim 4 or claim 5, **characterised in that** the light sources (7) of one of the lighting devices (B1,B2,B3,B4) are connected in series at least in sections.

## Revendications

1. Dispositif (1) pour l'éclairage d'objets, comprenant :
- une surface de rayonnement (3),
- au moins deux mécanismes d'éclairage (B1, B2, B3, B4), dans lequel
- lesdits au moins deux mécanismes d'éclairage (B1, B2, B3, B4) sont disposés et sont réalisés afin de générer, sur la surface de rayonnement (3), au moins deux distributions différentes de l'éclairage, comprenant
- une caméra qui présente un temps d'exposition prédéterminé, et comprenant
- un mécanisme de commande, dans lequel
- le mécanisme de commande est conçu pour la commande des mécanismes d'éclairage (B1, B2, B3, B4), **caractérisé en ce que**
- le mécanisme de commande est conçu pour la variation de la luminosité des mécanismes d'éclairage (B1, B2, B3, B4) via une préconfiguration de durées d'éclairage, dans lequel le mécanisme de commande est conçu pour la détermination d'une durée d'éclairage maximale pour les mécanismes d'éclairage (B1, B2, B3, B4), qui correspond au temps d'exposition prédéterminé de la caméra, dans lequel le mécanisme de commande est réalisé pour le réglage individuel de la luminosité des mécanismes d'éclairage (B1, B2, B3, B4) par l'intermédiaire de la commande des mécanismes d'éclairage (B1, B2, B3, B4) avec des durées d'éclairage, dans lequel on peut faire varier de 0 % à 100 % la luminosité de mécanismes d'éclairage individuels en sélectionnant d'une manière individuelle les durées d'éclairage pour les mécanismes d'éclairage individuels (B1, B2, B3, B4) entre 0 % et 100 % de la durée d'éclairage maximale, et dans lequel le mécanisme de commande est conçu pour synchroniser les durées d'éclairage des mécanismes d'éclairage (B1, B2, B3, B4) avec les temps d'exposition de la caméra.

2. Dispositif (1) selon la revendication 1, **caractérisé en ce que**
- un premier mécanisme d'éclairage (B1) desdits au moins deux mécanismes d'éclairage (B1, B2, B3, B4) s'étend dans une première direction, dans lequel
- un deuxième mécanisme d'éclairage (B2) desdits au moins deux mécanismes d'éclairage (B1, B2, B3, B4) s'étend dans une deuxième direction, et dans lequel
- la première direction et la deuxième direction sont orientées de préférence en inclinaison l'une par rapport à l'autre.

3. Dispositif (1) selon la revendication 1, **caractérisé en ce que**
a) une multitude de mécanismes d'éclairage (B1, B2, B3, B4) sont disposés sous la forme de lignes et/ou de colonnes sur la surface de rayonnement (3), dans lequel les mécanismes d'éclairage (B1, B2, B3, B4) peuvent être commandés indépendamment les uns des autres par colonnes et/ou par lignes, et/ou **en ce que**
b) le dispositif (1) est réalisé d'une manière telle que les mécanismes d'éclairage (B1, B2, B3, B4) peuvent être commandés uniquement par lignes entières et/ou par colonnes entières, et/ou **en ce que**
c) les mécanismes d'éclairage (B1, B2, B3, B4) sont disposés sous la forme d'anneaux concentriques sur la surface de rayonnement (3) de préférence plane, et/ou **en ce que**
d) lesdits au moins deux mécanismes d'éclairage (B1, B2, B3, B4) sont disposés dans un agencement circulaire sur la surface de rayonnement (3) de préférence plane , dans lequel ils forment différents secteurs, et/ou **en ce que**
e) un premier mécanisme d'éclairage desdits au moins deux mécanismes d'éclairage (B1, B2, B3, B4) s'étend le long d'une première coordonnée angulaire, dans lequel un deuxième mécanisme d'éclairage desdits au moins deux mécanismes d'éclairage (B1, B2, B3, B4) s'étend le long d'une coordonnée longitudinale ou le long d'une deuxième coordonnée angulaire différente de la première coordonnée angulaire, et/ou **en ce que**
f) une multitude de mécanismes d'éclairage (B1, B2, B3, B4), qui présentent respectivement précisément une et une seule source de rayonnement, sont disposés en formant une matrice sur la surface de rayonnement.

4. Dispositif (1) selon la revendication 1, **caractérisé en ce que**
a) au moins un mécanisme d'éclairage (B1, B2, B3, B4) présente une multitude de sources de lumière (7) disposées les unes à côté des autres sur l'étendue du mécanisme d'éclairage (B1, B2, B3, B4), et/ou **en ce que**
b) au moins un mécanisme d'éclairage (B1, B2, B3, B4) présente précisément une source de rayonnement qui présente au moins une source de lumière (7) ,
dans lequel les sources de lumière (7) sont réalisées de préférence sous la forme de DEL.

5. Dispositif (1) selon la revendication 4, **caractérisé en ce que** des sources de rayonnement ou de lumière (7) directement voisines et/ou des mécanismes d'éclairage (B1, B2, B3, B4) directement voisins présentent un écartement, en particulier un écartement moyen, l'un par rapport à l'autre, de 0,5 mm au minimum à 200 mm au maximum, de préférence de 1 mm au minimum à 100 mm au maximum, de préférence de 2 mm au minimum à 50 mm au maximum, de préférence de 5 mm au minimum à 20 mm au maximum, de préférence de 10 mm.

6. Dispositif (1) selon la revendication 1, **caractérisé en ce que** l'on prévoit au moins deux groupes de mécanismes d'éclairage (B1, B2, B3, B4), dans lequel un premier groupe de mécanismes d'éclairage (B1) peut être commandé par colonnes et un deuxième groupe de mécanismes d'éclairage (B2) peut être commandé par lignes sur la surface de rayonnement (3).

7. Dispositif (1) selon l'une quelconque des revendications précédentes, **caractérisé en ce que** le mécanisme de commande est conçu à des fins d'échange entre différentes distributions de l'éclairage avec une fréquence de 150 Hz au minimum à 2 MHz au maximum, de préférence de 500 Hz au minimum à 1 MHz au maximum, de préférence de 2 kHz au minimum à 200 kHz au maximum, de préférence de 10 kHz au minimum à 50 kHz au maximum, de préférence de 25 kHz.

8. Dispositif (1) selon l'une quelconque des revendications précédentes, **caractérisé en ce qu'**un élément de diffusion est disposé avant la surface de rayonnement (3), de préférence à une distance de la surface de rayonnement de préférence de 0,5 mm au minimum à 200 mm au maximum, de préférence de 1 mm au minimum à 100 mm au maximum, de préférence de 2 mm au minimum à 50 mm au maximum, de préférence de 5 mm au minimum à 20 mm au maximum, de préférence de 10 mm.

9. Dispositif (1) selon la revendication 1 ou 2, **caractérisé en ce que** la surface de rayonnement (3) est réalisée contre une plaque transparente (5), dans lequel contre au moins deux bords de la plaque transparente (5) est disposé respectivement un mécanisme d'éclairage (B1, B2, B3, B4) d'une manière telle que le rayonnement émis par le mécanisme d'éclairage (B1, B2, B3, B4) est couplé à la plaque transparente (5).

10. Dispositif (1) selon la revendication 9, **caractérisé en ce que** la plaque transparente (5) présente une structure de découplage.

11. Dispositif (1) selon l'une quelconque des revendications précédentes, **caractérisé en ce que** la surface de rayonnement (3) présente une zone de visibilité (9).

12. Dispositif (1) selon l'une quelconque des revendications précédentes, **caractérisé en ce que** la surface de rayonnement (3) est réalisée sous une forme plane, courbe ou incurvée, en particulier sous la forme d'un cylindre, sous une forme en partie cylindrique, sous la forme d'un cône, sous une forme en partie conique, sous la forme d'une sphère, sous une forme en partie sphérique, sous forme d'une surface de forme libre, sous une forme rectangulaire, sous une forme circulaire ou sous une forme ovale.

13. Dispositif (1) selon l'une quelconque des revendications 4 ou 5, **caractérisé en ce que** les sources de lumière (7) d'un des mécanismes d'éclairage (B1, B2, B3, B4) sont montées en série au moins en partie.
